(19) Europäisches Patentamt / European Patent Office / Office européen des brevets

(11) **EP 4 358 280 A1**

(12) **EUROPEAN PATENT APPLICATION**
published in accordance with Art. 153(4) EPC

(43) Date of publication:
**24.04.2024 Bulletin 2024/17**

(21) Application number: **22825090.8**

(22) Date of filing: **17.06.2022**

(51) International Patent Classification (IPC):
**H01M 50/536** (2021.01)    **H01M 4/66** (2006.01)
**H01M 50/534** (2021.01)    **H01M 50/54** (2021.01)

(52) Cooperative Patent Classification (CPC):
**H01M 4/66; H01M 50/534; H01M 50/536;**
**H01M 50/54;** Y02E 60/10; Y02P 70/50

(86) International application number:
**PCT/JP2022/024354**

(87) International publication number:
**WO 2022/265102 (22.12.2022 Gazette 2022/51)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:    **18.06.2021   JP 2021101528**

(71) Applicant: **Softbank Corp.**
**Tokyo 105-7529 (JP)**

(72) Inventors:
• **SAITO Takaya**
**Tokyo 105-7529 (JP)**
• **TAKAYANAGI Yoshiki**
**Tokyo 105-7529 (JP)**
• **MIYAKAWA Shuntaro**
**Tokyo 105-7529 (JP)**

(74) Representative: **Michalski Hüttermann & Partner**
**Patentanwälte mbB**
**Kaistraße 16A**
**40221 Düsseldorf (DE)**

(54) **MANUFACTURING METHOD, PROGRAM, MANUFACTURING SYSTEM, MULTILAYER COLLECTOR, BATTERY, MOVING BODY AND FLIGHT VEHICLE**

(57)    A manufacturing method of a multilayer collector is provided, comprising preparing a resin layer, and a laminate in which collectors including a first metal layer and a second metal layer arranged on both sides of the resin layer are laminated, arranging a tab on one of an upper surface side and a lower surface side of the laminate, and a Sub-tab on another, performing heat compression on a portion to be welded of the tab, the laminate, and the Sub-tab in a laminating direction, to elute resin of the resin layer in the portion to be welded, and performing resistance welding on the portion to be welded.

FIG.5

EP 4 358 280 A1

**Description**

BACKGROUND

1. TECHNICAL FIELD

The present invention relates to a manufacturing method, a program, a manufacturing system, a multilayer collector, a battery, a moving body, and a flight vehicle.

2. RELATED ART

Metal plated resin film has been known (see Patent document 1, for example).

Prior Art Literature

Patent Document

Patent Document 1: Japanese Patent Application Publication No. 2018-181823

GENERAL DISCLOSURE

According to an embodiment of the present invention, a manufacturing method of a multilayer collector is provided. The manufacturing method may comprise preparing a resin layer, and a laminate in which collectors including a first metal layer and a second metal layer arranged on both sides of the resin layer are laminated. The manufacturing method may comprise arranging a tab on one of an upper surface side and a lower surface side of the laminate, and a Sub-tab on another. The manufacturing method may comprise performing heat compression on a portion to be welded of the tab, the laminate, and the Sub-tab in a laminating direction, to elute resin of the resin layer in the portion to be welded. The manufacturing method may comprise performing resistance welding on the portion to be welded.

A manufacturing method of a multilayer collector according to claim 1, wherein in the performing heat compression, only the portion to be welded of the tab, the laminate, and the Sub-tab are subjected to heat compression in a laminating direction, to elute resin in the resin layer of the portion to be welded. In the preparing, the laminate may be prepared in which the collectors including the resin layer, the first metal layer, and the second metal layer, which has a thickness that satisfies a following numerical expression 1, are laminated.

Numerical expression 1

$$0.04 \leq \frac{(\text{THICKNESS OF FIRST METAL LAYER} + \text{THICKNESS OF SECOND METAL LAYER})}{(\text{THICKNESS OF RESIN LAYER})}$$

In the preparing, the laminate may be prepared in which the collectors including a resin layer with a thickness of 3 to 7 $\mu$m, the first metal layer with a thickness of 0.1 to 2 $\mu$m, and the second metal layer with a thickness of 0.1 to 2 pm are laminated. The portion to be welded may have a circular shape with a diameter of 1 to 10 mm. A diameter of the portion to be welded, a total of a thickness of the first metal layer and a thickness of the second metal layer, and a thickness of the resin layer may satisfy a following numerical expression 2.

Numerical expression 2

$$0.25 \leq \frac{\text{DIAMETER OF PORTION TO BE WELDED}}{\text{THICKNESS OF FIRST METAL LAYER} + \text{THICKNESS OF SECOND METAL LAYER}} \times \text{THICKNESS OF RESIN LAYER} \leq 500$$

A diameter of the portion to be welded, a total of a thickness of the first metal layer and a thickness of the second metal layer, and a thickness of the resin layer may satisfy a following numerical expression 3.

Numerical expression 3

$$2.25 \leq \frac{\text{DIAMETER OF PORTION TO BE WELDED}}{\text{THICKNESS OF FIRST METAL LAYER} + \text{THICKNESS OF SECOND METAL LAYER}} \times \text{THICKNESS OF RESIN LAYER} \leq 175$$

A diameter of the portion to be welded, a total of a thickness of the first metal layer and a thickness of the second metal layer, and a thickness of the resin layer may satisfy a following numerical expression 4.

Numerical expression 4

$$4.5 \leq \frac{\text{DIAMETER OF PORTION TO BE WELDED}}{\text{THICKNESS OF FIRST METAL LAYER} + \text{THICKNESS OF SECOND METAL LAYER}} \times \text{THICKNESS OF RESIN LAYER} \leq 21$$

A diameter of the portion to be welded, a total of a thickness of the first metal layer and a thickness of the second metal layer, and a thickness of the resin layer may satisfy a following numerical expression 5.

Numerical expression 5

$$7.5 \leq \frac{\text{DIAMETER OF PORTION TO BE WELDED}}{\text{THICKNESS OF FIRST METAL LAYER} + \text{THICKNESS OF SECOND METAL LAYER}} \times \text{THICKNESS OF RESIN LAYER} \leq 15$$

Thermal contraction in TD direction of resin in the resin layer may be 1% or less. Material of the first metal layer and the second metal layer may be copper, and material of the resin layer may be polyimide, polypropylene, polyethylene, polyphenylene sulfide, or polyethylene terephthalate. A thickness of the tab may be 100 to 300 $\mu$m. The thickness of the tab may be determined within the range of 100 to 300 $\mu$m depending on the size of the current value. For example, the thickness of the Sub-tab may be 50 to 100 $\mu$m. The portion to be welded may have a polygonal shape.

According to an embodiment of the present invention, a program for causing a computer to perform the manufacturing method of a multilayer collector is provided.

According to an embodiment of the present invention, a manufacturing method of a battery is provided. The manufacturing method may comprise preparing a resin layer having a thickness of 3 to 7 $\mu$m and a laminate in which collectors including a first metal layer and a second metal layer each having a thickness of 0.1 to 2 $\mu$m arranged on both sides of the resin layer are laminated. The manufacturing method may comprise arranging a tab on one of an upper surface side and a lower surface side of the laminate, and a Sub-tab on another. The manufacturing method may comprise performing heat compression on a portion to be welded with a diameter of 1 to 10 mm of the tab, the laminate, and the Sub-tab in a laminating direction, to elute resin in the resin layer of the portion to be welded. The manufacturing method may comprise performing resistance welding on the portion to be welded to generate a multilayer collector. The manufacturing method may comprise generating a battery of a flight vehicle having a solar panel and the battery mounted thereon that utilizes electrical power of the battery by using the multilayer collector. In the generating the battery, the battery of a HAPS having the solar panel and the battery mounted thereon that flies in a stratosphere to provide wireless communication service on ground may be generated by using the multilayer collector.

According to an embodiment of the present invention, a manufacturing system is provided. The manufacturing system may comprise a preparation unit that prepares a resin layer, and a laminate in which collectors including a first metal layer and a second metal layer arranged on both sides of the resin layer are laminated. The manufacturing system may comprise an arrangement unit that arranges a tab on one of an upper surface side and a lower surface side of the laminate, and a Sub-tab on another. The manufacturing system may comprise a heat compression unit that performs heat compression on a portion to be welded of the tab, the laminate, and the Sub-tab in a laminating direction, to elute resin of the resin layer in the portion to be welded. The manufacturing system may comprise a welding unit that performs resistance welding on the portion to be welded.

According to an embodiment of the present invention, a multilayer collector in which a plurality of collectors are laminated with a tab arranged on one of an upper side and a lower side and a Sub-tab on another is provided. The multilayer collector may comprise a first region that is not between the tab and the Sub-tab, including a resin layer intermediate between each of the plurality of collectors, a second region that is between the tab and the Sub-tab, including a resin layer intermediate between each of the plurality of collectors, and a third region that is between the tab and the Sub-tab, having less amount of resin intermediate between each of the plurality of collectors than an amount of resin in each resin layer between the plurality of collectors in the first region or having no resin intermediate between each of plurality of the collectors, the third region being subjected to resistance welding.

According to an embodiment of the present invention, a battery having the multilayer collector is provided. According to an embodiment of the invention, a moving body having the battery is provided. According to an embodiment of the invention, a flight vehicle having the battery is provided.

According to an embodiment of the present invention, a manufacturing method of a collector is provided. The manufacturing method may comprise preparing a resin layer. The manufacturing method may comprise generating a collector in which metal is arranged on at least a part of side surfaces, an upper surface, and a lower surface of the resin layer, and the metal layer on the upper surface and the metal layer on the lower surface are electrically connected by means of metal on at least a part of the side surfaces.

In the generating, the metal may be arranged by performing molecular bonding of the metal to at least a part of side surfaces, an upper surface, and a lower surface of the resin layer. In the generating, metal may be arranged on at least a part of side surfaces, an upper surface, and a lower surface of the resin layer by means of sputtering. In the generating, metal thin film may be formed on at least a part of side surfaces, an upper surface, and a lower surface of the resin layer by means of sputtering, and the metal may be plated onto the metal thin film. In the generating, the metal may be arranged on at least one side surface of four side surfaces, an upper surface, and a lower surface of the quadrangular-shaped resin layer to generate the collector. In the generating, a plurality of the collectors in which the metal is arranged on at least one side surface may be generated by arranging the metal on the entire resin layer and cutting it. In the preparing, the resin layer having at least one hole penetrating from the upper surface to the lower surface may be prepared, and in the generating, the metal may be arranged on at least a part of side surfaces, an upper surface, and a lower surface of the resin layer, and an inner face of the hole, to generate the collector.

In the generating, by arranging an active material in a region other than a first end of an upper surface of a layer of the metal in the quadrangular-shaped resin layer with the metal arranged on its entirety and cutting it, a plurality of the collector each including both a part of the first end and a portion in which the active material is arranged may be generated. In the generating, by arranging an active material in a region other than a first end of an upper surface of a layer of the metal in the quadrangular-shaped resin layer with the metal arranged on its entirety, and cutting a part of the portion of the first end of the resin layer, a plurality of convex portions are formed at the portion of the first end, and by cutting the resin layer, a plurality of the collector each including both one of the plurality of convex portions and a portion in which the active material is arranged may be generated.

In the generating, by arranging an active material in a region other than a first end and a second end opposing the first end of an upper surface of a layer of the metal in the quadrangular-shaped resin layer with the metal arranged on its entirety and cutting it, a plurality of the collector each including both a part of the first end or a part of the second end, and a portion in which the active material is arranged may be generated. In the generating, by arranging an active material in a region other than the first end and the second end of an upper surface of a layer of the metal in the resin layer, and cutting each of a first partial resin layer including the first end and a second partial resin layer including the second end, that are cut at a portion where the active material is arranged, a plurality of the collectors each including both a part of the first end and a portion in which the active material is arranged, and the collectors each including both a part of the second portion and a portion in which the active material is arranged may be generated. In the generating, the active material is arranged in a region other than the first end and the second end on the upper surface of a layer of the metal in the resin layer, and a part of the portion of the first end of the resin layer is cut, thereby forming a plurality of convex portions in a portion of the first end, a part of the portion of the second end of the resin layer is cut, thereby forming a plurality of convex portions in a portion of the second end, and the resin layer is cut, thereby a plurality of the collectors each including both one of the plurality of convex portions in the first end or one of the plurality of convex portions in the second end, and a portion on which the active material is arranged may be generated.

In the generating, after a plurality of convex portions is formed at the first end by cutting a part of the first end of the quadrangular-shaped resin layer, by arranging the metal on the entire resin layer, arranging the active material in a region on an upper surface of a portion other than the first end of the resin layer, and cutting the resin layer, a plurality of the collectors each including both one of the plurality of convex portions and a portion on which the active material is arranged may be generated. In the generating, after forming a plurality of convex portions at the first end by cutting a part of a portion of the first end of the quadrangular-shaped resin layer and forming a plurality of convex portions at the second end by cutting a part of a portion of the second end opposing the first end of the resin layer, by arranging the metal on the entire resin layer, arranging an active material in a region on the upper surface of a portion other than the first end and the second end of the resin layer and cutting the resin layer, a plurality of the collectors each including both one of the plurality of convex portions in the first end or one of the plurality of convex portions in the second end and a portion on which the active material is arranged may be generated.

According to an embodiment of the present invention, a manufacturing method is provided. The manufacturing method may comprise preparing a resin layer having at least one hole penetrating from an upper surface to a lower surface. The manufacturing method may comprise generating a collector in which metal is arranged on an upper surface and a lower surface of the resin layer, and an inner face of a hole, and the metal layer on the upper surface and the metal layer on the lower surface are electrically connected by means of metal on the inner face. The collector may be an anode collector having the resin layer and a copper layer arranged in the resin layer. The collector may be a cathode collector having the resin layer and an aluminum layer arranged in the resin layer.

According to an embodiment of the present invention, a program for causing a computer to perform the above-described manufacturing method of the collector is provided.

According to an embodiment of the present invention, a manufacturing system is provided. The manufacturing system may comprise a preparation unit that prepares a resin layer. The manufacturing system may comprise a generation unit that generates a collector having metal arranged on at least a part of side surfaces, a upper surface, and a lower surface of a resin layer, and including an intermediate resin layer.

According to an embodiment of the present invention, a manufacturing system is provided. The manufacturing system may comprise a preparation unit that prepares a resin layer having at least one hole penetrating from an upper surface to a lower surface. The manufacturing system may comprise a generation unit that generate a collector in which metal is arranged on an upper surface and a lower surface of the resin layer, and an inner face of a hole, and the metal layer on the upper surface and the metal layer on the lower surface are electrically connected by means of metal on the inner face.

According to an embodiment of the present invention, a collector is provided. The collector may include a resin layer, and metal layers arranged on at least a part of side surfaces, an upper surface, and a lower surface of the resin layer, wherein the metal layer on the upper surface and the metal layer on the lower surface may be electrically connected by means of metal in at least a part of the side surface.

According to an embodiment of the present invention, a collector is provided. The collector may include a resin layer having at least one hole penetrating from an upper surface to a lower surface, and metal arranged on an upper surface and a lower surface of the resin layer, and an inner face of the hole, wherein the metal layer on the upper surface and the metal layer on the lower surface may be electrically connected by means of metal on the inner face.

According to an embodiment of the present invention, a battery having the collector is provided.

The summary clause does not necessarily describe all necessary features of the embodiments of the present invention. The present invention may also be a sub-combination of the features described above.

BRIEF DESCRIPTION OF THE DRAWINGS

Fig. 1 schematically illustrates an example of a battery component 10.

Fig. 2 schematically illustrates another example of the battery component 10.

Fig. 3 schematically illustrates an example of a configuration of an anode collector 200.

Fig. 4 schematically illustrates an example of a configuration of a cathode collector 300.

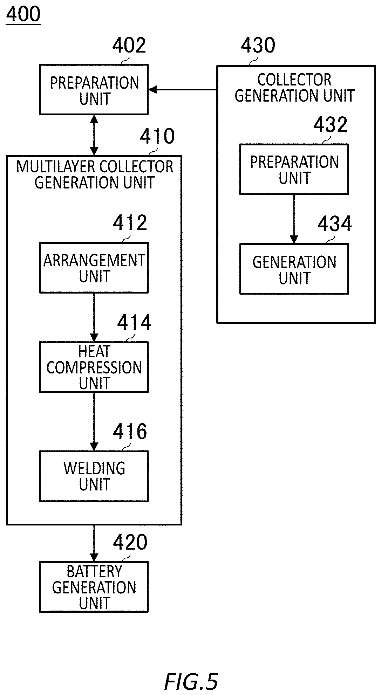

Fig. 5 schematically illustrates an example of a functional configuration of a manufacturing system 400.

Fig. 6 is an illustration for describing a manufacturing method of a multilayer collector 100.

Fig. 7 is an illustration for describing the manufacturing method of the multilayer collector 100.

Fig. 8 is an illustration for describing the manufacturing method of the multilayer collector 100.

Fig. 9 is an illustration for describing the manufacturing method of the multilayer collector 100.

Fig. 10 is an illustration for describing the manufacturing method of the multilayer collector 100.

Fig. 11 is an illustration for describing plating of a resin layer 210.

Fig. 12 is an illustration for describing plating of a resin layer 210.

Fig. 13 is an illustration for describing plating of a resin layer 210.

Fig. 14 is a A-A sectional view.

Fig. 15 schematically illustrates an example of flow of processing performed by a collector generation unit 430.

Fig. 16 is an illustration for describing a manufacturing process of the anode collector 200.

Fig. 17 is an illustration for describing a manufacturing process of the anode collector 200.

Fig. 18 is an illustration for describing a manufacturing process of the anode collector 200.

Fig. 19 schematically illustrates an example of flow of processing performed by the collector generation unit 430.

Fig. 20 is an illustration for describing a manufacturing process of the anode collector 200.

Fig. 21 is an illustration for describing a manufacturing process of the anode collector 200.

Fig .22 schematically illustrate an example of flow of processing performed by the collector generation unit 430.

Fig. 23 is an illustration for describing a manufacturing process of the anode collector 200.

Fig. 24 is an illustration for describing a manufacturing process of the anode collector 200.

Fig. 25 schematically illustrates an example of a hardware configuration of a computer 1200 that functions as the manufacturing system 400.

DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solving means of the invention.

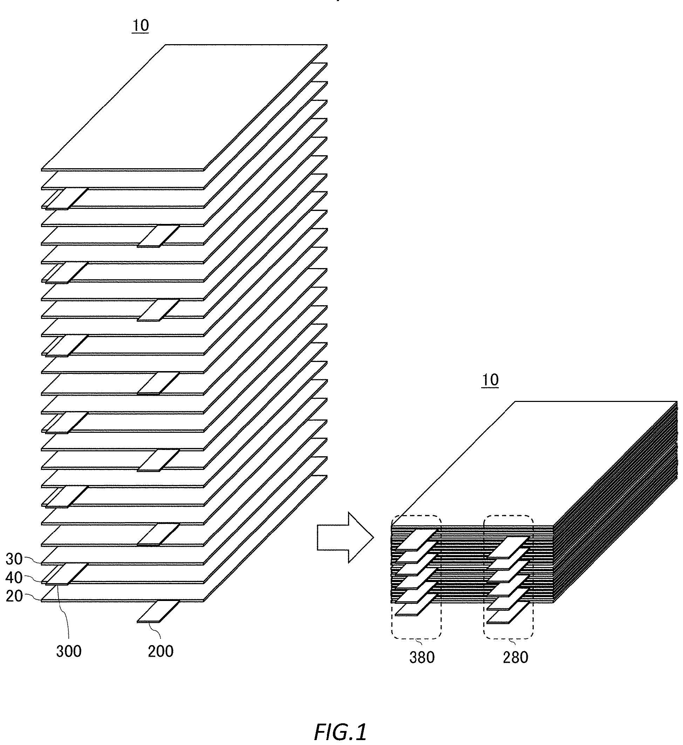

Fig. 1 schematically illustrates an example of a battery component 10. The battery component 10 has a plurality of anodes 20 and cathodes 30 that are alternately laminated with a separator 40 in between, as illustrated in Fig. 1. The anode 20 has an anode collector 200. The cathode 30 has a cathode collector 300.

The battery component 10 may be a component of the battery of any type. The battery component 10 is a component of a lithium-ion battery, for example. For example, tabs are welded to each of a laminate 280 in which the anode collectors 200 are laminated and a laminate 380 in which the cathode collectors 300 are laminated, the entire battery component 10 is put into a housing or the like, which is filled with electrolyte, to form a lithium-ion battery. The battery component 10 may be a component of a lithium-air battery. The battery component 10 may be a component of a battery of another type.

In Fig. 1, although a case where the anode collector 200 and the cathode collector 300 are arranged in the same direction is illustrated, it is not limited thereto. The anode collector 200 and the cathode collector 300 may be arranged in different directions. For example, the anode collector 200 and the cathode collector 300 may be arranged in opposite directions.

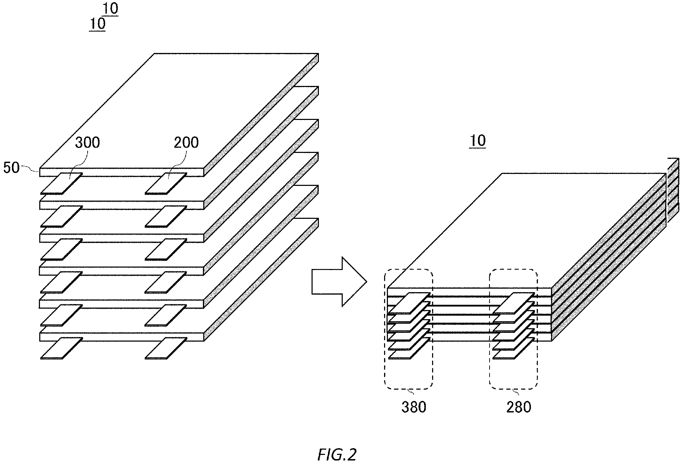

Fig. 2 schematically illustrates another example of the battery component 10. The battery component 10 has a laminate battery 50 that is laminated, as illustrated in Fig. 2. The laminate battery 50 has the anode collector 200 and the cathode collector 300. For example, when the battery component 10 is a component of a lithium-ion battery, a tab is welded to each of the laminate 280 and the laminate 380, and the entire battery component 10 is put into a housing or the like, thereby forming a lithium-ion battery.

In Fig. 2, a case where the anode collector 200 and the cathode collector 300 are arranged in the same direction is illustrated, but it is not limited thereto. The anode collector 200 and the cathode collector 300 may be arranged in different directions. For example, the anode collector 200 and the cathode collector 300 may be arranged in opposite directions.

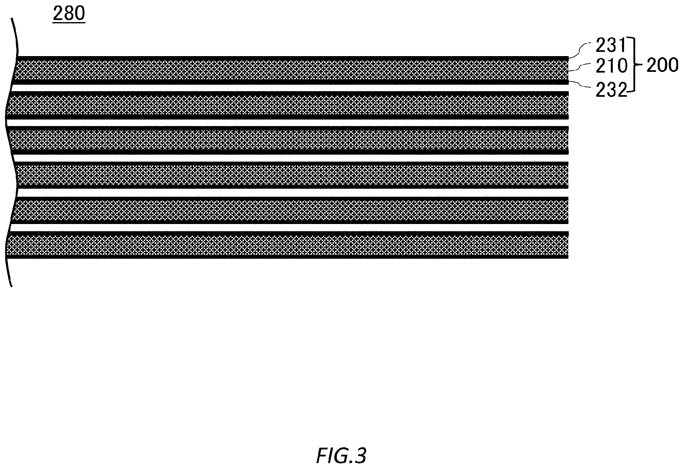

Fig. 3 schematically illustrates an example of a configuration of the anode collector 200. The anode collector 200 illustrated in Fig. 3 has a resin layer 210, and a metal layer 231 and a metal layer 232 arranged on both sides of the resin layer 210. The anode collector 200 has, for example, the resin layer 210, and the metal layer 231 and the metal layer 231 coated on the resin layer 210.

As resin in the resin layer 210 according to the present embodiment, resin having lower conductivity than the metal of the metal layer 231 and the metal layer 232 but having a lower density than the metal of the metal layer 231 and the metal layer 232 is adopted. An example of resin in the resin layer 210 includes PI (polyimide). In addition, an example of the resin in the resin layer 210 includes PET (polyethylene terephthalate). PP (polypropylene), PE (polyethylene), PPS (polyphenylene sulfide) and the like may be used as resin in the resin layer 210. These are illustrative, and other types of resin may be used as resin in the resin layer 210. For example, when the battery component 10 is a component of a lithium-ion battery, the metal of the metal layer 231 and the metal layer 232 may be copper, and the resin in the resin layer 210 may be polyimide. The metal of the metal layer 231 and the metal layer 232 may be other metal.

Depending on the application of the battery, there may be cases where the current may be low but it is desired to reduce the weight. For example, for a flight vehicle with a solar panel and a battery mounted thereon that utilizes electrical power of the battery, since there is less change in flight speed, the output current of the battery may be low, but the weight of the entire flight vehicle is required to be light. Examples of such a flight vehicle include HAPS (High Altitude Platform Station) that flies in the stratosphere to provide wireless communication service on the ground, airplanes, and the like. There are other applications in which the current may be low but it is requested to reduce the weight, in this manner.

For example, for a lithium-ion battery, copper foil is often used as the anode collector, and such a request can be met by reducing the thickness of the copper foil. However, there is a technical limitation in reducing the thickness of the copper foil, and also, if the thickness of the copper foil is reduced too much, the strength cannot be maintained and the possibility of breakage increases. Since the intermediate part of the anode collector 200 according to the present embodiment is a resin layer 210, electric resistance is increased but the density can be reduced as compared to an anode collector formed solely of metal. In addition, the strength of the anode collector 200 can be maintained.

For example, when the metal of the metal layer 230 is copper, and supposing that the resin in the resin layer 210 is PET, since the density of copper is about 8.96 g/cm$^3$ and the density of PET is about 1.38 g/cm$^3$, the weight can be significantly reduced compared to a case where the anode collector is composed solely of copper.

For example, when it is assumed that the thickness of the anode collector 200 is 8 μm, supposing that the thickness of the resin layer 210 is 6 μm, the density is about 3.25 g/cm$^3$, which results in a weight ratio of approximately 35% compared to a case where it is composed solely of copper, allowing reduction of approximately 65% in weight. In addition, supposing that the thickness of the resin layer 210 is 7 μm, the density is about 2.30 g/cm$^3$, which results in a weight ratio of approximately 25% compared to a case where it is composed solely of copper, allowing reduction of approximately 75% in weight.

In a case where the anode collector is composed solely of metal, even if the anode collector is multi-layered, a conduction path can be secured between metal (between conductive materials) by welding such as ultrasonic welding, resistance welding, and laser welding. By contrast, when the anode collector having an intermediate resin layer is multi-layered, a conduction path cannot be secured. Thus, it cannot be subjected to resistance welding as it is. In addition, since features such as boiling point, thermal expansion, strength and the like may differ between the metal layer and the resin layer, when laser welding is attempted, problems such as disruption or remaining of vacant holes may occur. In addition, when ultrasonic welding is attempted, crack or breaking may occur.

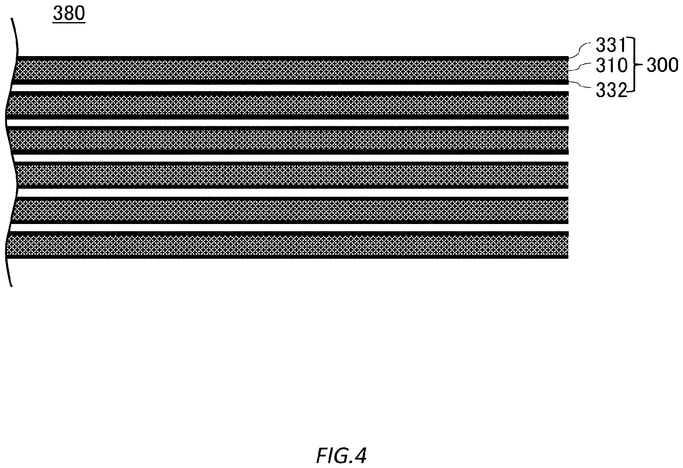

Fig. 4 schematically illustrates an example of a configuration of a cathode collector 300. The cathode collector 300 according to the present embodiment has a resin layer 310, and a metal layer 331 and a metal layer 332 arranged on both sides of the resin layer 310. The cathode collector 300 has, for example, the resin layer 310, and the metal layer 331 and the metal layer 332 coated on the resin layer 310.

As resin in the resin layer 310 according to the present embodiment, resin having lower conductivity than the metal of the metal layer 331 and the metal layer 332 but having a lower density than the metal of the metal layer 331 and the metal layer 332 is adopted. An example of resin in the resin layer 310 includes PI (polyimide). In addition, an example of the resin in the resin layer 310 includes PET (polyethylene terephthalate). PP (polypropylene), PE (polyethylene), PPS (polyphenylene sulfide) and the like may be used as resin in the resin layer 310. These are illustrative, and other types of resin may be used as resin in the resin layer 310. For example, when the battery component 10 is a component of a lithium-ion battery, the metal of the metal layer 330 may be aluminum, and the resin in the resin layer 310 may be polyimide. The metal of the metal layer 330 may be other metal.

Fig, 5 schematically illustrates an example of a functional configuration of a manufacturing system 400. The manufacturing system 400 comprises a preparation unit 402, a multilayer collector generation unit 410, a battery generation unit 420, and a collector generation unit 430. Note that, it is no necessarily imperative that the manufacturing system 400 comprises all of the above.

The manufacturing system 400 may be configured by one device. In addition, the manufacturing system 400 may be configured by a plurality of devices. For example, the manufacturing system 400 is configured by a device comprising the preparation unit 402 and the battery generation unit 420, a device comprising the battery generation unit 420, and a device comprising the collector generation unit 430. The manufacturing system 400 may not comprise the battery generation unit 420. The manufacturing system 400 may not comprise the collector generation unit 430.

The preparation unit 402 prepares the laminate 280 and the laminate 380. The preparation unit 402 may prepare the battery component 10. The preparation unit 402 prepares the battery component 10 by receiving the battery component 10 from another device, for example. The preparation unit 402 may prepare the battery component 10 by laminating an anode 20, a cathode 30, and a separator 40. The laminate preparation unit 402 may prepare the battery component 10 by laminating a laminate battery 50.

The thickness of the resin layer 210 may be 3 to 7 $\mu$m. Examples of the thickness of the resin layer 210 include 3 $\mu$m, 4 $\mu$m, 5 $\mu$m, 6 $\mu$m, 7 pm and the like.

The thickness of the metal layer 231 may be 0.1 to 2 $\mu$m. The thickness of the metal layer 231 may be, for example, 0.5 $\mu$m to 1 $\mu$m. Examples of the thickness of the metal layer 231 include 0.1 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 09 $\mu$m, 1 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2 $\mu$m and the like.

The thickness of the metal layer 232 may be 0.1 to 2 $\mu$m. The thickness of the metal layer 232 may be, for example, 0.5 $\mu$m to 1 $\mu$m. Examples of the thickness of the metal layer 232 include 0.1 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 09 $\mu$m, 1 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2 $\mu$m and the like.

Thermal contraction in TD (transverse direction) direction of the resin in the resin layer 210 may be 1% or less. The preparation unit 402 may prepare the battery component 10 in which the resin layer 210 is composed of resin with thermal contraction in the TD direction of 1% or less. The preparation unit 402 may prepare the battery component 10 in which the resin layer 210 is composed of resin with thermal contraction in the TD direction of 1% or less, by adjusting the material, the manufacturing method, the machining method and the like.

Thermal contraction in the TD direction of the resin in the resin layer 310 may be 1% or less. The preparation unit 402 may prepare the battery component 10 in which the resin layer 310 is composed of resin with thermal contraction in the TD direction of 1% or less. The preparation unit 402 may prepare the battery component 10 in which the resin layer 310 is composed of resin with thermal contraction in the TD direction of 1% or less, by adjusting the material, the manufacturing method, the machining method and the like.

The preparation unit 402 may prepare the laminate 280 in which the anode collectors 200 including the resin layer 210, the metal layer 231, and the metal layer 232 are laminated, having a thickness that satisfies the following numerical expression 6.

Numerical expression 6

$$0.04 \leq \frac{(\text{THICKNESS OF METAL LAYER 231} + \text{THICKNESS OF METAL LAYER 232})}{(\text{THICKNESS OF RESIN LAYER 210})}$$

The thickness of the resin layer 310 may be 3 to 7 $\mu$m. Examples of the thickness of the resin layer 310 include 3 $\mu$m, 4 $\mu$m, 5 $\mu$m, 6 $\mu$m, 7 $\mu$m and the like.

The thickness of the metal layer 331 may be 0.1 to 2 $\mu$m. The thickness of the metal layer 331 may be, for example, 0.5 $\mu$m to 1 $\mu$m. Examples of the thickness of the metal layer 331 include 0.1 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 09 $\mu$m, 1 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2 $\mu$m and the like.

The thickness of the metal layer 332 may be 0.1 to 2 $\mu$m. The thickness of the metal layer 332 may be, for example, 0.5 $\mu$m to 1 $\mu$m. Examples of the thickness of the metal layer 332 include 0.1 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 09 $\mu$m, 1 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2 $\mu$m and the like.

The preparation unit 402 may prepare the laminate 380 in which the cathode collectors 300 including the resin layer 310, the metal layer 331, and the metal layer 332 are laminated, having a thickness that satisfies the numerical expression in which the thickness of the metal layer 231, the thickness of the metal layer 232, and the thickness of the resin layer 210 in the above-described numerical expression 6 is substituted with the thickness of the metal layer 331, the thickness of the metal layer 332, and the thickness of the resin layer 310.

The multilayer collector generation unit 410 generates the multilayer collector from the laminate 280 and the laminate 380 prepared by the preparation unit 402. The multilayer collector generation unit 410 comprises an arrangement unit 412, a heat compression unit 414, and a welding unit 416.

The arrangement unit 412 arranges a tab on one of the upper surface side and the lower surface side of the laminate 280 and a Sub-tab on another, for example. The arrangement unit 412 arranges the tab on the upper surface side of the laminate 280, and arranges the Sub-tab on the lower surface side of the laminate 280, for example. The arrangement unit 412 arranges the Sub-tab on the upper surface side of the laminate 280, and arranges the tab on the lower surface side of the laminate 280, for example.

The arrangement unit 412 arranges a tab on one of the upper surface side and the lower surface side of the laminate 380, and a Sub-tab on another, for example. The arrangement unit 412 arranges the tab on the upper surface side of the laminate 380, and arranges the Sub-tab on the lower surface side of the laminate 380, for example. The arrangement unit 412 arranges the Sub-tab on the upper surface side of the laminate 380, and arranges the tab on the lower surface side of the laminate 380, for example.

The material of the tab to be arranged on the laminate 280 may be the same as the material of the metal layer 231 and the metal layer 232. For example, when the material of the metal layer 231 and the metal layer 232 is copper, the material of the tab to be arranged on the laminate 280 may also be copper. Note that, the material of the tab to be arranged on the laminate 280 may be different from the material of the metal layer 231 and the metal layer 232.

The material of the tab to be arranged on the laminate 380 may be the same as the material of the metal layer 331 and the metal layer 332. For example, when the material of the metal layer 331 and the metal layer 332 is aluminum, the material of the tab to be arranged on the laminate 380 may also be aluminum. Note that, the material of the tab to be arranged on the laminate 380 may be different from the material of the metal layer 331 and the metal layer 332.

The thickness of the tab is desirably 100 to 300 $\mu$m. The thickness of the tab may be determined within the range of 100 to 300 $\mu$m depending on the size of the current value.

The thickness of the Sub-tab is better to be thick from the perspective of maintaining the strength of the multilayer collector, but better to be thin from the perspective of reducing the weight of the multilayer collector. For example, the thickness of the Sub-tab is desirably 50 to 100 $\mu$m.

The heat compression unit 414 performs heat compression on the portion to be welded of the tab, the laminate 280, and the Sub-tab in the laminating direction to elute the resin in the resin layer 210 of the portion to be welded. The heat compression unit 414 may perform heat compression on only the portion to be welded of the tab, the laminate 280, and the Sub-tab in the laminating direction to elute the resin in the resin layer 210 of the portion to be welded. The heat compression unit 414 may perform heat compression at a temperature according to the type of the resin in the resin layer 210. The temperature according to the type of the resin is a temperature corresponding to the melting point of the resin or higher, for example, which is a predetermined temperature.

The heat compression unit 414 performs heat compression on the portion to be welded of the tab, the laminate 380, and the Sub-tab in the laminating direction to elute the resin in the resin layer 310 of the portion to be welded. The heat compression unit 414 may perform heat compression on only the portion to be welded of the tab, the laminate 380, and the Sub-tab in the laminating direction to elute the resin in the resin layer 310 of the portion to be welded. The heat compression unit 414 may perform heat compression at a temperature according to the type of the resin in the resin layer 310. The temperature according to the type of the resin is a temperature corresponding to the melting point of the resin or higher, for example, which is a predetermined temperature.

The welding unit 416 performs resistance welding on the portion to be welded of the tab, the laminate 280, and the Sub-tab, having been subjected to heat compression by the heat compression unit 414. The multilayer collector 100 is generated by the welding unit 416 performing resistance welding on said portion to be welded. The welding unit 416 performs resistance welding on the portion to be welded of the tab, the laminate 380, and the Sub-tab, having been subjected to heat compression by the heat compression unit 414. The multilayer collector 150 is generated by the welding unit 416 performing resistance welding on said portion to be welded. As a device for performing resistance welding, precision resistance welding machine from NAG System or the like may be adopted, for example.

The portion to be welded has a circular shape having a diameter of 1 to 10 mm, for example. The portion to be welded desirably has a circular shape of 3 to 5 mm. Note that, the shape of the portion to be welded is not limited to a circular shape, and may be a polygonal shape. The diameter of the portion to be welded, the total of the thickness of the metal layer 231 and the thickness of the metal layer 232, and the thickness of the resin layer 210 may be determined to satisfy the following numerical expression 7. The manufacturing system 400 may be designed such that the diameter of the portion to be welded, the total of the thickness of the metal layer 231 and the thickness of the metal layer 232, and the thickness of resin layer 210 satisfy the following numerical expression 7.

Numerical expression 7

$$0.25 \leq \frac{\text{DIAMETER OF PORTION TO BE WELDED}}{\text{THICKNESS OF METAL LAYER 231} + \text{THICKNESS OF METAL LAYER 232}} \times \text{THICKNESS OF RESIN LAYER 210} \leq 500$$

The diameter of the portion to be welded, the total of the thickness of the metal layer 231 and the thickness of the metal layer 232, and the thickness of the resin layer 210 may be determined to satisfy the following numerical expression 8. The manufacturing system 400 may be designed such that the diameter of the portion to be welded, the total of the thickness of the metal layer 231 and the thickness of the metal layer 232, and the thickness of resin layer 210 satisfy the following numerical expression 8.

Numerical expression 8

$$2.25 \leq \frac{\text{DIAMETER OF PORTION TO BE WELDED}}{\text{THICKNESS OF METAL LAYER 231 +} \atop \text{THICKNESS OF METAL LAYER 232}} \times \text{THICKNESS OF RESIN LAYER 210} \leq 175$$

The diameter of the portion to be welded, the total of the thickness of the metal layer 231 and the thickness of the metal layer 232, and the thickness of the resin layer 210 may be determined to satisfy the following numerical expression 9. The manufacturing system 400 may be designed such that the diameter of the portion to be welded, the total of the thickness of the metal layer 231 and the thickness of the metal layer 232, and the thickness of resin layer 210 satisfy the following numerical expression 9.

Numerical expression 9

$$4.5 \leq \frac{\text{DIAMETER OF PORTION TO BE WELDED}}{\text{THICKNESS OF METAL LAYER 231 +} \atop \text{THICKNESS OF METAL LAYER 232}} \times \text{THICKNESS OF RESIN LAYER 210} \leq 21$$

The diameter of the portion to be welded, the total of the thickness of the metal layer 231 and the thickness of the metal layer 232, and the thickness of the resin layer 210 may be determined to satisfy the following numerical expression 10. The manufacturing system 400 may be designed such that the diameter of the portion to be welded, the total of the thickness of the metal layer 231 and the thickness of the metal layer 232, and the thickness of resin layer 210 satisfy the following numerical expression 10.

Numerical expression 10

$$7.5 \leq \frac{\text{DIAMETER OF PORTION TO BE WELDED}}{\text{THICKNESS OF METAL LAYER 231 +} \atop \text{THICKNESS OF METAL LAYER 232}} \times \text{THICKNESS OF RESIN LAYER 210} \leq 15$$

The battery generation unit 420 generates the battery by using the multilayer collector generated by the multilayer collector generation unit 410. For example, the battery generation unit 420 puts the battery component 10 including the multilayer collector 100 and the multilayer collector 150 generated by the multilayer collector generation unit 410 into a housing, and generates the battery by performing operations according to the type of the battery, such as injecting electrolyte. The battery generation unit 420 may generate a moving body having the generated battery. For example, the battery generation unit 420 generates a moving body having the battery by mounting the generated battery onto the moving body. The battery generation unit 420 may generate a flight vehicle having the generated battery. For example, the battery generation unit 420 generates a flight vehicle having the battery by mounting the generated battery onto the flight vehicle. Examples of the flight vehicle include HAPS, airplanes and the like.

Note that, herein, a case where both of the anode collector 200 and the cathode collector 300 include resin layers as intermediate layers is described as an example, but it is not limited thereto. For example, only the anode collector 200 among the anode collector 200 and the cathode collector 300 may include resin layers as intermediate layers, and the cathode collector 300 may be composed solely of metal. In this case, heat compression may not be performed on the laminate 380. For example, only cathode collector 300 the among the anode collector 200 and the cathode collector 300 may include resin layers as intermediate layers, and the anode collector 200 may be composed solely of metal. In this case, heat compression may not be performed on the laminate 280.

The collector generation unit 430 includes resin layer as intermediate layers, and generates a collector in which the metal layer on the upper surface and the metal layer on the lower surface are electrically connected. The collector generation unit 430 comprises a preparation unit 432 and a generation unit 434.

The preparation unit 432 prepares the resin layer. The generation unit 434 arranges metal on at least a part of the side surface, the upper surface, and the Lower surface of the resin layer prepared by the preparation unit 432, to generate a collector in which the metal layer on the upper surface of the resin layer and the metal layer on the lower surface of the resin layer are electrically connected by the metal in at least a part of the side surface of the resin layer.

The generation unit 434 causes molecular bonding of metal to at least a part of the side surface, the upper surface, and the lower surface of the resin layer, for example. The generation unit 434 generates the collector by applying molecular bonding agent to at least a part of the side surface, the upper surface, and the lower surface of the resin layer, to perform metal plating, for example. Herein, a case where molecular bonding is used is mainly described as an example, but the generation unit 434 may use sputtering instead of molecular bonding. For example, the generation unit 434 arranges the metal onto at least a part of the side surface, the upper surface, and the lower surface of the resin layer by means of sputtering. For example, the generation unit 434 generates the collector by forming a metal thin film by means of sputtering onto at least a part of the side surface of the resin layer, the upper surface and the lower surface, to perform metal plating.

The preparation unit 432 prepares a quadrangular-shaped resin layer, for example. The generation unit 434 may cause molecular bonding of metal to at least one side surface of the four side surfaces, the upper surface, and the lower surface of the quadrangular-shaped resin layer, to generate the collector in which the metal layer on the upper surface of the resin layer and the metal layer on the lower surface of the resin layer are electrically connected by the metal of the at least one side surface of the side surfaces of the resin layer. The generation unit 434 may cause molecular bonding of metal to the entire quadrangular-shaped resin layer. The generation unit 434 may cause molecular bonding of the metal to three side surfaces of the quadrangular-shaped resin layer, and the upper surface and the lower surface. The generation unit 434 may cause molecular bonding of the metal to two side surfaces of the quadrangular-shaped resin layer, and the upper surface and the lower surface. The generation unit 434 may cause molecular bonding of the metal to one side surface of the quadrangular-shaped resin layer, and the upper surface and the lower surface. The generation unit 434 may generate a plurality of collectors in which metal is molecularly bonded to at least one side surface by cutting the resin layer to which metal is molecularly bonded to its entirety.

The generation unit 434 may apply an active material to the generated collector, thereby generating the collector having the active material. The generation unit 434 may apply the active material to the metal layer on the upper surface of the resin layer to which metal is molecularly bonded to its entirety and cut the resin layer thereafter, thereby generating a plurality of collectors each having the active material.

For example, when generating the anode 20 having the anode collector 200, the preparation unit 432 prepares the resin layer 210. The generation unit 434 may then cause molecular bonding of metal onto at least a part of the side surfaces, the upper surface, and the lower surface of the resin layer 210 prepared by the preparation unit 432 and apply anode material onto the metal layer on the upper surface, thereby generating the anode 20 having the resin layer 210, the metal layer 230, and the anode material.

For example, when generating the cathode 30 having the cathode collector 300, the preparation unit 432 prepares the resin layer 310. The generation unit 434 may then cause molecular bonding of metal onto at least a part of the side surfaces, the upper surface, and the lower surface of the resin layer 310 prepared by the preparation unit 432 and apply cathode material onto the metal layer on the upper surface, thereby generating the cathode 30 having the resin layer 310, the metal layer 330, and the cathode material.

The preparation unit 402 may prepare the battery component 10 by laminating the anode 20 and the cathode 30 generated by the collector generation unit 430 with the separator 40. The preparation unit 402 may acquire, from the collector generation unit 430, the battery component 10 generated by the collector generation unit 430 by laminating the anode 20, the cathode 30, and the separator 40. In this manner, the multilayer collector can be generated in which the metal layer on the upper surface of the resin layer and the metal layer on the lower surface of the resin layer are electrically connected by means of metal of at least a part of the side surface of the resin layer, in addition to the portion to be welded.

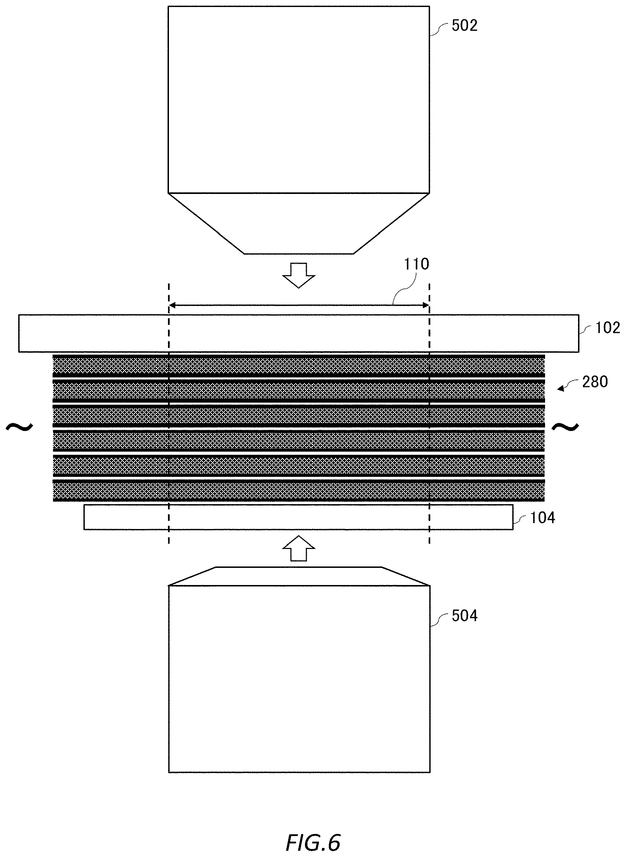

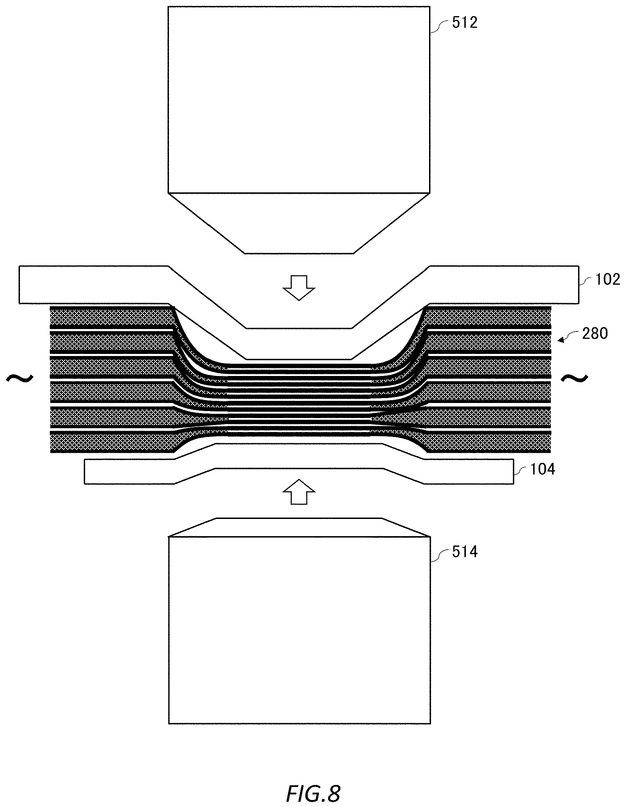

Figs. 6 to 10 are illustrations for describing the manufacturing method of the multilayer collector 100. Herein, although the manufacturing method of the multilayer collector 100 is described, the manufacturing method of the multilayer collector 150 is also similar to the manufacturing method of the multilayer collector 100.

As illustrated in Fig. 6, first, the preparation unit 402 prepares the laminate 280, the arrangement unit 412 arranges the tab 102 on the upper surface side of the laminate 280, and arranges the Sub-tab 104 on the lower surface side of the laminate 280. Note that, as illustrated in Fig. 6, illustration of the laminate 280 in the left-right direction is omitted in the figure.

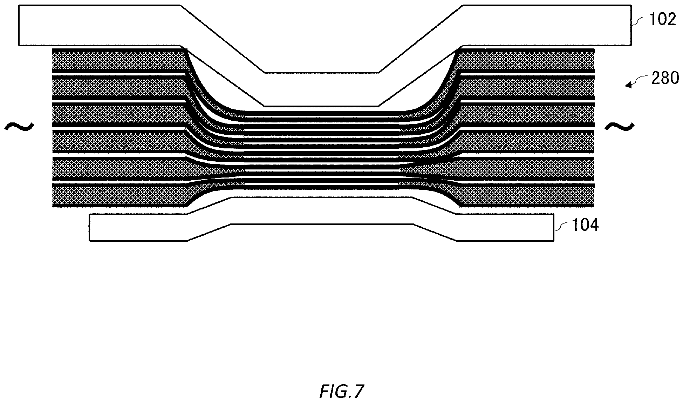

Then, the heat compression unit 414 performs heat compression on the portion to be welded 110 of the tab 102, the laminate 280, and the Sub-tab 104 in the laminating direction to elute the resin in the resin layer 210 of the portion to be welded. The heat compression unit 414 may perform heat compression on the portion to be welded 110 of the tab 102, the laminate 280, and the Sub-tab 104 from the up-down direction by means of a heat compression machine 502 and heat compression machine 504. In this manner, as illustrated in Fig. 7, the resin in the resin layer 210 of the portion to be welded 110 is eluted, and the metal layer 231 and the metal layer 232 of the plurality of anode collectors 200 are brought into contact with each other.

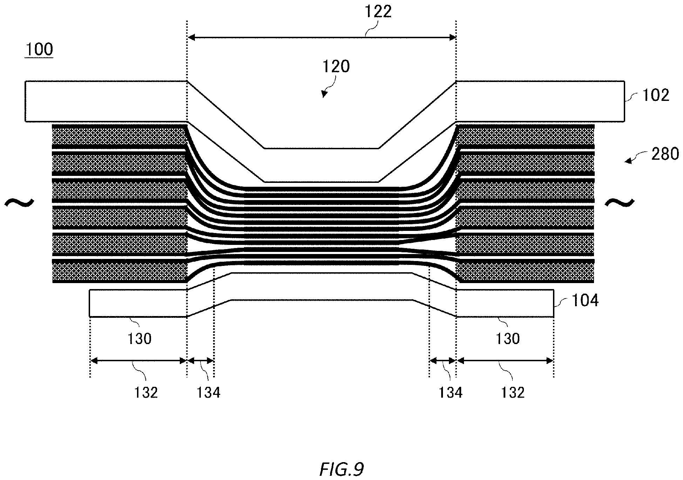

Then, the welding unit 416 performs resistance welding on the portion to be welded 110 subjected to heat compression by the heat compression unit 414. The welding unit 416 may sandwich the portion to be welded 110 of the tab 102, the laminate 280, and the Sub-tab 104 from the up-down direction by means of the welding machine 512 and the welding machine 514 to perform resistance welding by loading a current. In this manner, the multilayer collector 100 that is electrically conducted in the laminating direction at the welding spot 120 is generate, as illustrated in Fig. 9. The tab 102, the laminate 280, and the Sub-tab 104 is fixed by a fixing portion 130, which is a resin layer portion sandwiched by the tab 102 and the Sub-tab 104.

The welding diameter 122 of the welding spot 120 may be 1 to 10 mm. The welding diameter 122 may desirably be 3 to 5 mm. The fixing portion width 132 of the fixing portion 130 may be 0.3 mm or more. The fixing portion width 132 may be 1 mm or more. The width 134 including no resin and no fixing portion may be 0.1 mm or less.

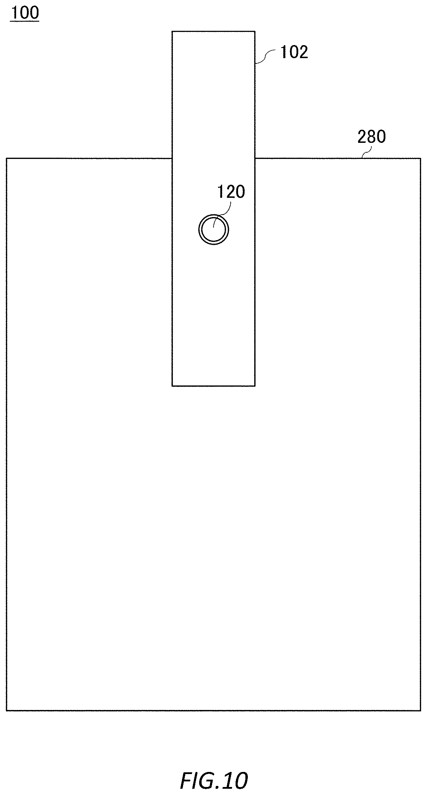

Fig. 10 schematically illustrates the multilayer collector 100 seen from the upper surface side. As illustrated in Fig. 10, there may be only one welding spot 120. The welding spot 120 may be generated at a plurality of locations.

In the following Table 1, experimental result of variation in resistance, when generating the multilayer collector 100 with various combinations of the thickness of the resin layer 210 and the total of the thickness of the metal layers on both sides (the total of the thickness of the metal layer 231 and the thickness of the metal layer 232) is shown.

Table 1

| (TOTAL THICKNESS OF METAL LAYERS ON BOTH SIDES) / (RESIN LAYER THICKNESS) | VARIATION IN RESISTANCE |
|---|---|
| 0.02 | 3/10 |
| 0.04 | 8/10 |
| 0.14 | 9/11 |
| 0.20 | 10/10 |
| 0.40 | 10/10 |

In the present experiment, five anode collectors 200 were laminated and welded to the tab 102 and the Sub-tab 104, and resistance between each one of the anode collector 200 and the tab 102 was measured to calculate the average and standard deviation. When standard deviation $\sigma \times 2 \leqq$ average value of resistance is met, it was determined as pass, and the passing rate was recorded.

When "the total of thickness of the metal layers on both sides/resin layer thickness" becomes 0.04 or higher, the passing rate becomes higher, as compared to cases where the above rate is 0.04 or less, and the passing rate was over 80%. Therefore, for the manufacturing system 400 according to the present embodiment may be implemented on condition that numerical expression 1 and numerical expression 6 are met.

As shown in Table 1, the thicker the metal layer and the thinner the resin layer, the resistance becomes stable. Note that, if the resin layer is too thin, the strength becomes lower, and there is a higher possibility that the welding is not successful. In addition, the thicker the metal layer, the heavier it becomes, so it is not desirable from the perspective of reducing weight. Therefore, "the total thickness of metal layers on both sides/resin layer thickness" is desirably 0.04 or more, and that it is not too big.

The following Table 2 shows the experimental results of number of passed welding and variation in resistance, when generating the multilayer collector 100 with various combinations of the welding diameter 122 of the welding spot 120, the thickness of the resin layer 210 and the total of the thickness of the metal layers on both sides (the total of the thickness of the metal layer 231 and the thickness of the metal layer 232).

Table 2

| (WELDING DIAMETR) / (TOTAL THICKNESS OF METAL LAYERS ON BOTH SIDES) $\times$ (RESIN LAYER THICKNESS) | NUMBER OF PASSED WELDING | VARIATION IN RESISTANCE |
|---|---|---|
| 0.20 | 3/10 | 5/10 |
| 0.25 | 8/10 | 8/10 |
| 2.25 | 9/11 | 9/11 |
| 7.50 | 10/10 | 10/10 |
| 15.00 | 10/10 | 10/10 |
| 175.00 | 10/11 | 8/11 |
| 500.00 | 10/9 | 8/10 |

(continued)

| (WELDING DIAMETR) / (TOTAL THICKNESS OF METAL LAYERS ON BOTH SIDES) × (RESIN LAYER THICKNESS) | NUMBER OF PASSED WELDING | VARIATION IN RESISTANCE |
|---|---|---|
| 600.00 | 10/6 | 2/10 |

In the present experiment, five anode collectors 200 were laminated and welded to the tab 102 and the Sub-tab 104, and the laminate 280 and the tab 102 were pulled to measure the breaking strength. If there was no breaking at 1N/10mm or more, it was determined as welding passed, and the passing rate was recorded. As for the variation in resistance, five anode collectors 200 were laminated and welded to the tab 102 and the Sub-tab 104, and resistance between each one of the anode collector 200 and the tab 102 was measured to calculate the average and standard deviation. When standard deviation $\sigma \times 2$ S average value of resistance is met, it was determined as pass, and the passing rate was recorded.

When the value of "(the welding diameter)/(the total of metal layer thickness on both sides)×(resin layer thickness)" is small, the welding strength is reduced since the welding diameter is small or the resin layer is thin. It can be considered that this is because the welding area is small or the resin layer to maintain the strength is thin. When the welding area is small, it can be considered that the variation in resistance also increases. In addition, the value of "(the welding diameter)/(the total of metal layer thickness on both sides)×(resin layer thickness)" is large, the welding strength is also considered to be reduced since the welding diameter is large or the resin layer is thick.

For both the number of passed welding and the variation in resistance, the number of pass was higher for those with "(the welding diameter)/(the total of metal layer thickness on both sides)×(resin layer thickness)" within the range of 0.25 to 500, as compared to those outside this range, and the passing rate exceeded 80%. Therefore, for the manufacturing system 400 according to the present embodiment may be implemented on condition that numerical expression 2 and numerical expression 7 are met.

In addition, for both the number of passed welding and the variation in resistance, the number of pass was even higher for those with "(the welding diameter)/(the total of metal layer thickness on both sides)×(resin layer thickness)" within the range of 2.25 to 175, as compared to those outside this range. Therefore, for the manufacturing system 400 according to the present embodiment may be implemented on condition that numerical expression 3 and numerical expression 8 are met.

In addition, for both the number of passed welding and the variation in resistance, the number of pass was even higher for those with "(the welding diameter)/(the total of metal layer thickness on both sides)×(resin layer thickness)" within the range of 7. 5 to 15, as compared to those outside this range. Therefore, for the manufacturing system 400 according to the present embodiment may be implemented on condition that numerical expression 4 and numerical expression 9 are met.

The following Table 3 shows the experimental result of the number of passed welding when generating the multilayer collector 100 by using resin with different thermal contraction in the TD direction.

Table 3

| THERMAL CONTRACTION AMOUNT | NUMBER OF PASSED WELDING |
|---|---|
| 0.50% | 10/10 |
| 1.00% | 8/10 |
| 1.50% | 5/11 |
| 2.00% | 2/10 |

In the present experiment, five anode collectors 200 were laminated and welded to the tab 102 and the Sub-tab 104, and the laminate 280 and the tab 102 were pulled to measure the breaking strength. If there was no breaking at 1N/10mm or more, it was determined as welding passed, and the passing rate was recorded.

When thermal contraction is large, it can be considered that deformation of resin becomes large at the time of heating and even welding cannot be performed, and thereby the welding strength is reduced. As shown in Table 3, the passing rate becomes higher with thermal contraction of 1% or less, as compared to cases where thermal contraction is higher than 1%, and the passing rate exceeded 80%. Therefore, the manufacturing system 400 according to the present embodiment may be implemented on condition that a resin layer composed of resin with thermal contraction in the TD direction of 1% or less is used.

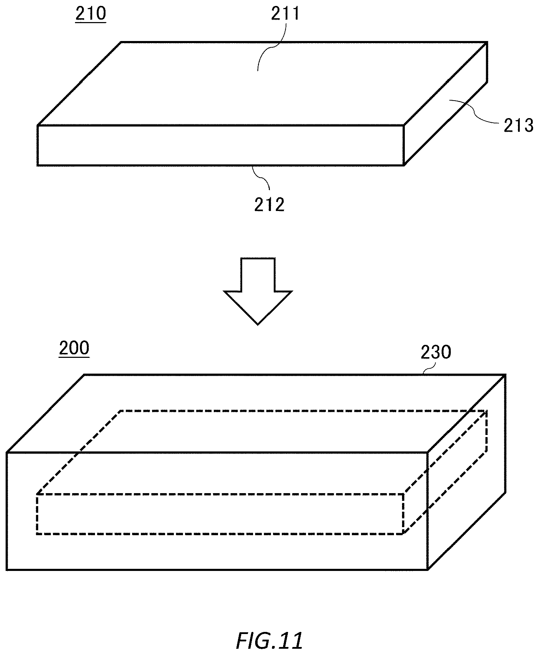

Fig. 11 is an illustration for describing metal plating of the resin layer 210 by the collector generation unit 430.

The generation unit 434 may generate the metal layer 230 by causing molecular bonding of metal to the entire resin layer 210 prepared by the preparation unit 432, as illustrated in Fig. 6. The metal layer 230 includes metal molecularly bonded to the upper surface 211 of the resin layer 210, metal molecularly bonded to the lower surface 212 of the resin layer 210, metal molecularly bonded to edge portions of the resin layer 210, that is, four side surfaces 213 of the resin layer 210. In this manner, by causing molecular bonding of metal to the entire resin layer 210, the anode collector 200 with high conductivity can be generated. Although description is made for the resin layer 210 in Fig. 11, it also applies to the resin layer 310. In addition, the generation unit 434 may use sputtering instead of molecular bonding.

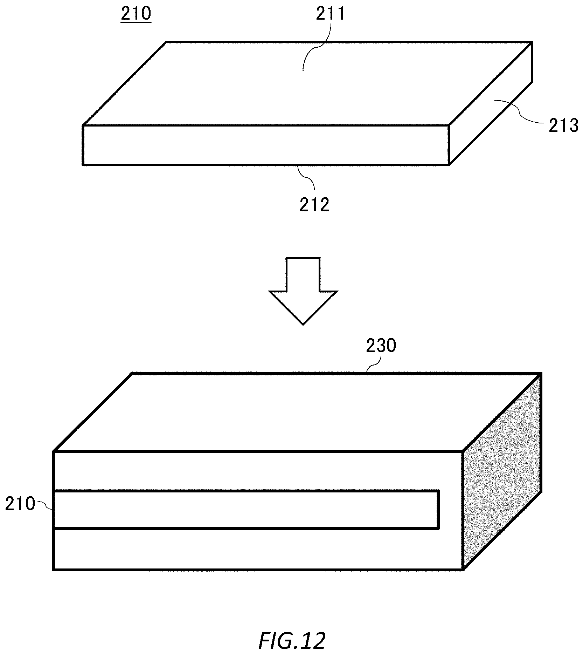

Fig. 12 is an illustration for describing metal plating of the resin layer 210 by the collector generation unit 430. The generation unit 434 may generate the metal layer 230 by causing molecular bonding of metal to one of four side surfaces 213, and the upper surface 211 and the lower surface 212 of the resin layer 210 prepared by the preparation unit 432, as illustrated in Fig. 12. The metal layer 230 includes metal molecularly bonded to the upper surface 211 of the resin layer 210, metal molecularly bonded to the lower surface 212 of the resin layer 210, metal molecularly bonded to one side surface 213 of the resin layer 210. In this manner, by causing molecular bonding of metal to at least a part of the side surfaces of the resin layer 210, the anode collector 200 with light weight can be generated, although conductivity is lower compared to the collector illustrated in Fig. 11. Although description is made for the resin layer 210 in Fig. 12, it also applies to the resin layer 310. In addition, the generation unit 434 may use sputtering instead of molecular bonding.

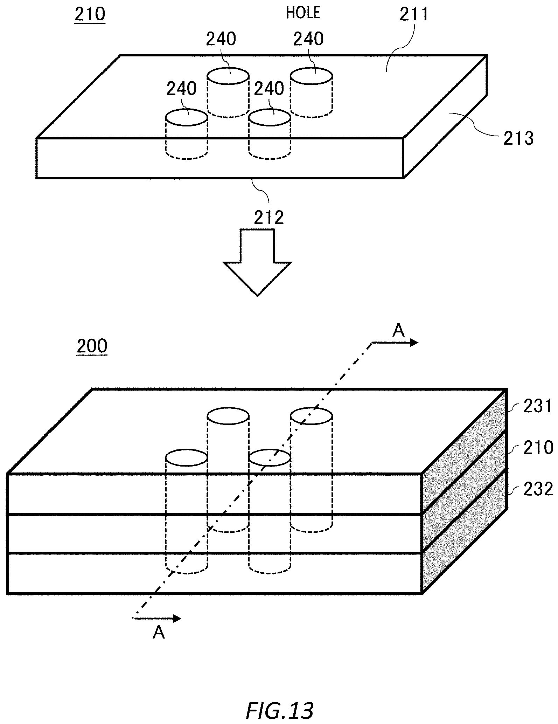

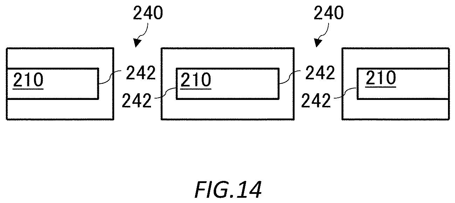

Fig. 13 is an illustration for describing metal plating of the resin layer 210. Fig. 14 is a A-A cross-sectional view. The preparation unit 432 may prepare the resin layer 210 having at least one hole 240 penetrating from the upper surface to the lower surface. In the example illustrated in Fig. 13, the resin layer 210 has four holes 240.

For example, the generation unit 434 applies molecular bonding agent on the upper surface 211, the lower surface 212 of the resin layer 210 having the hole 240, and the inner face 242 of the hole 240 and performs metal plating to generate the anode collector 200 including the resin layer 210, and the metal layer 231 on the upper surface side of the resin layer 210, the metal layer 232 on the lower surface side of the resin layer 210, and metal arranged on the inner face of the hole 240. The metal layer 231 and the metal layer 232 are electrically connected by means of the metal arranged on the inner face of the hole 240. With molecular bonding, such metal plating onto the inner face 242 of the hole 240 can be made achievable.

The number and size of the hole 240 may be determined according to the type of the resin layer 210, the size of the resin layer 210, the type of the metal, and the like. For example, the number and size of appropriate holes 240 may be determined by conducting experiments under various conditions, such as for each type of the resin layer 210, for each size of the resin layer 210, for each type the metal. As a specific example, the size of the hole 240 may be 0.01 mm to 5 mm in diameter. In addition, the spacing between the holes 240 may be 0.05 mm to 5 mm in center-distance.

The preparation unit 432 may prepare the resin layer 210 having the hole 240 by acquiring the resin layer 210 in which the hole 240 is formed. In addition, the preparation unit 432 may acquire the resin layer 210 in which no hole 240 is formed, to form the hole 240 in the resin layer 210. For example, the preparation unit 432 forms one or more holes 240 on the resin layer 210 by means of chemical etching. By using chemical etching, holes 240 with diameter of 30 $\mu$m to 200 $\mu$m can be formed at a pitch of 100 $\mu$m, for example.

The preparation unit 432 may form one or more holes 240 on the resin layer 210 by means of ultrasonic laser. In addition, the preparation unit 432 may form one or more holes 240 on the resin layer 210 by means of drilling use a drill for drilling. In addition, the preparation unit 432 may form one or more holes 240 on the resin layer 210 by means of a gas laser.

As illustrated in Fig. 13, by causing molecular bonding of metal to the upper surface 211 and the lower surface 212 of the resin layer 210 and the inner face 242 of the hole 240, the anode collector 200 with reduced weight can be generated, as compared to the anode collector 200 illustrated in Fig. 11. The collector generation unit 430 may generate the anode collector 200 by causing molecular bonding of metal to at least one of the side surfaces 213, the upper surface 211, the lower surface 212 of the resin layer 210, and the inner face 242 of the hole 240. In this manner, conductivity of the anode collector 200 can be enhanced while attempting to reduce the weight of the anode collector 200. Although description is made for the resin layer 210 in Figs. 13 and 14, it also applies to the resin layer 310. In addition, the generation unit 434 may use sputtering instead of molecular bonding. For example, the generation unit 434 form a metal thin film by means of sputtering on the upper surface 211, the lower surface 212, and the inner face 242 of the hole 240 of the resin layer 210 having the hole 240 and performs metal plating to generate the anode collector 200 including the resin layer 210, and the metal layer 231 on the upper surface side of the resin layer 210, the metal layer 232 on the lower surface side of the resin layer 210, and metal arranged on the inner face of the hole 240.

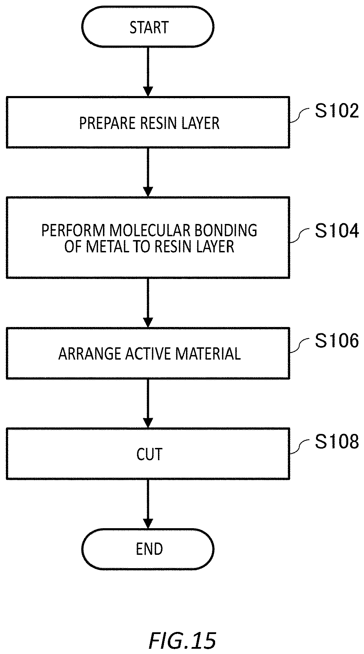

Fig. 15 schematically illustrate an example of flow of processing performed by a collector generation unit 430. Herein, flow of processing where a plurality of collectors having an active material is generated is described.

At step (steps may be described as S in short) 102, the preparation unit 432 prepares a quadrangular-shaped resin layer. At S104, the generation unit 434 causes molecular bonding of metal to the resin layer prepared at S102. The generation unit 434 may cause molecular bonding of metal to the entire resin layer. Note that, the generation unit 434 may cause molecular bonding of metal to at least a part of the side surfaces, the upper surface, and the lower surface of the resin layer. The generation unit 434 may use sputtering instead of molecular bonding.

At S106, the generation unit 434 arranges the active material on the metal layer on the upper surface of the resin layer. For example, the generation unit 434 arranges the active material in a region other than the first end of the upper surface of the metal layer. At S108, the generation unit 434 cuts the resin layer on which the active material is arranged at S106, to generate a plurality of collectors each including both a part of the first end and a portion on which the active material is arranged.

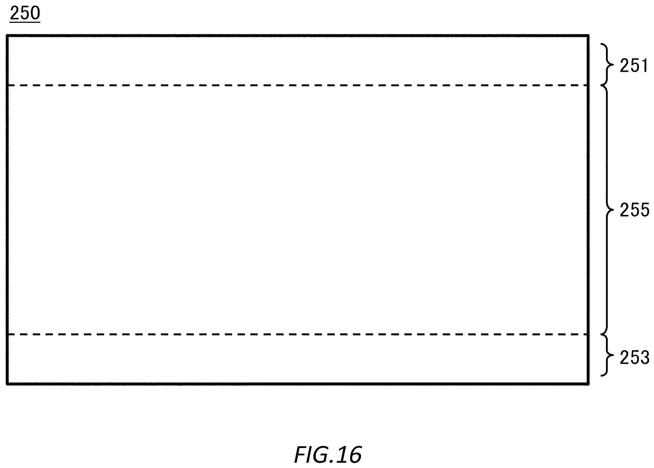

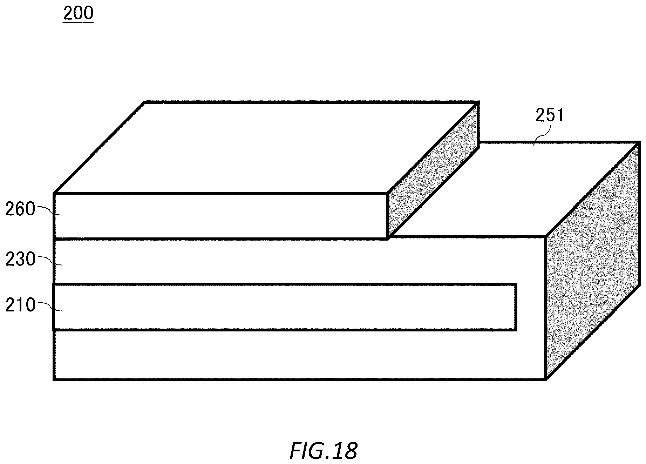

Fig. 16 to Fig. 18 are illustrations for describing the manufacturing process of the anode collector 200. The generation unit 434 generates a quadrangular-shaped resin layer 210 (this may be described as multilayered body 250) on which metal is arranged to its entirety. The generation unit 434 may arrange metal by means of molecular bonding, or may arrange metal by means of sputtering. Fig. 16 is a top view of the multilayered body 250. The multilayered body 250 may have a belt-like shape.

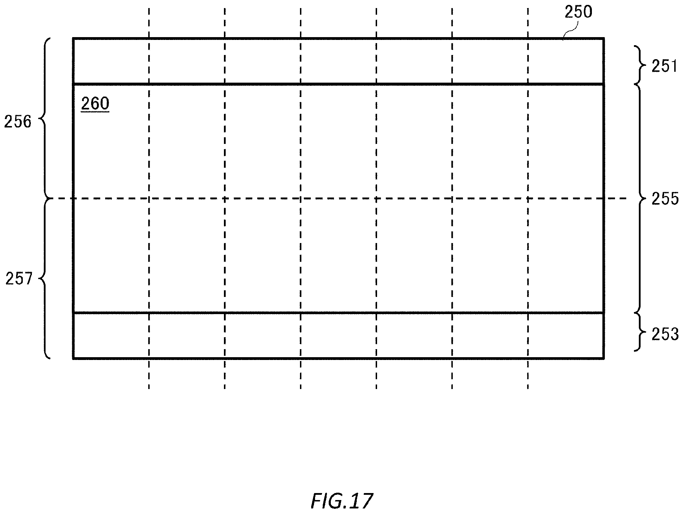

The generation unit 434 arranges an active material 260 on a region 255 other than the end 253 opposing the end 251 and the end 251 of the upper surface of the multilayered body 250 and cuts the multilayered body 250, thereby generating a plurality of anode collectors 200 each including both a part of the end 251 or a part of the end 253, and a portion on which the active material is arranged. As illustrated in Fig. 17, the generation unit 434 may generate the plurality of anode collectors 200 each including both a part of the end 251 or the part of the end 253, and a portion on which the active material is arranged, by arranging the active material 260 on the region 255 and cutting each of the partial resin layer 256 including the end 251 and the partial resin layer 257 including the end 253, that are cut at a portion where the active material 260 is arranged. Generation of the multilayered body 250, arrangement of the active material 260 and the like may be achieved by any methods, and roll-to-roll process or the like may be adopted, for example.

According to the example illustrated in Fig. 17, four anode collectors 200 in which metal is arranged on two side surfaces and ten anode collectors 200 in which metal is arranged on one side surface are manufactured. In this manner, according to the manufacturing process described in Fig. 16 to Fig. 18, a plurality of anode collectors 200 can be generated efficiently. Although description is made for the manufacturing process of the anode collector 200 in Fig. 16 to Fig. 18, it also applies to the manufacturing process of the cathode collector 300.

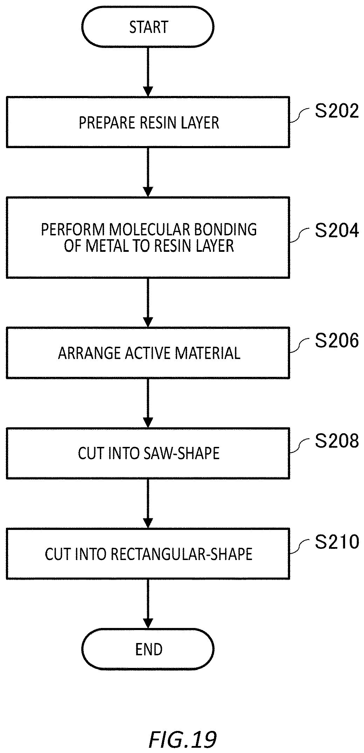

Fig. 19 schematically illustrates an example of flow of processing performed by the collector generation unit 430. Herein, flow of processing where a plurality of collectors having an active material is generated is described.

At S202, the preparation unit 432 prepares a quadrangular-shaped resin layer. At S204, the generation unit 434 causes molecular bonding of metal to the resin layer prepared at S202. The generation unit 434 may cause molecular bonding of metal to the entire resin layer. Note that, the generation unit 434 may cause molecular bonding of metal to at least a part of the side surfaces, the upper surface, and the lower surface of the resin layer. The generation unit 434 may use sputtering instead of molecular bonding.

At S206, the generation unit 434 arranges the active material on the metal layer on the upper surface of the resin layer. For example, the generation unit 434 arranges the active material in a region other than the first end of the upper surface of the metal layer. At S208, the generation unit 434 cuts a part of the portion of the first end of the resin layer, thereby cutting the first end into a saw shape to form a plurality of convex portions in a portion of the first end. At S210, the generation unit 434 cuts the resin layer into a rectangular shape, to generate a plurality of collectors each including both one convex portion and a portion on which the active material is arranged.

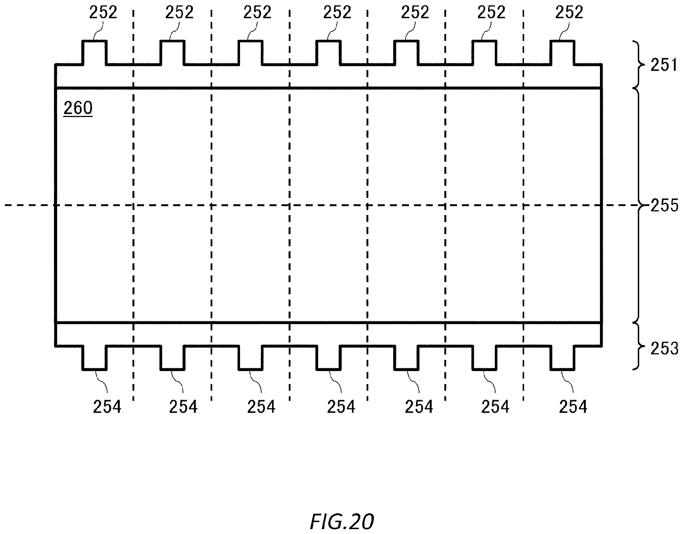

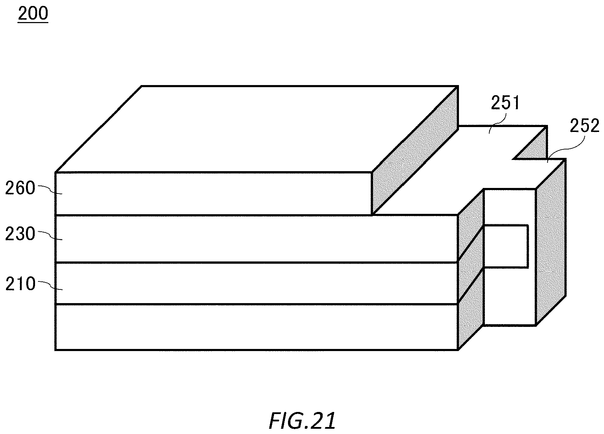

Fig. 20 and Fig. 21 are illustrations for describing the manufacturing process of the anode collector 200. The generation unit 434 arranges the active material 260 on a region 255 other than the end 253 opposing the end 251 and the end 251 on the upper surface of the multilayered body 250, and cuts a part of the portion of the end 251 of the multilayered body 250, thereby forming a plurality of convex portions 252 in a portion of the end 251, cuts a part of the portion of the end 253 of the multilayered body 250, thereby forming a plurality of convex portions 254 in a portion of the end 253, and cuts the multilayered body 250, thereby generating the plurality of anode collectors 200 each including both one convex portion 252 or one convex portion 254, and a portion on which the active material 260 is arranged. In this manner, the anode collector 200 with secured conductivity by means of the metal layer at the tip portion of the convex portion can be generated. Although description is made for the manufacturing process of the anode collector 200 in Fig. 20 and Fig. 21, it also applies to the manufacturing process of the cathode collector 300.

Fig .22 schematically illustrate an example of flow of processing performed by the collector generation unit 430. Herein, flow of processing where a plurality of collectors having an active material is generated is described.

At S302, the preparation unit 432 prepares a quadrangular-shaped resin layer. At S304, the generation unit 434 cuts a part of the portion of the first end of the resin layer, thereby cutting the first end into a saw shape to form a plurality of convex portions in a portion of the first end.

At S306, the generation unit 434 causes molecular bonding of metal to the entire resin layer on which the plurality of convex portions are formed at a portion of the first end at S304. The generation unit 434 may use sputtering instead of molecular bonding. At S308, the generation unit 434 arranges the active material on a region on the upper surface in a portion other than the first end of the resin layer. At S310, the generation unit 434 generates the plurality of collectors each including both one convex portion and a portion on which the active material is arranged, by cutting the resin layer into a rectangular shape.

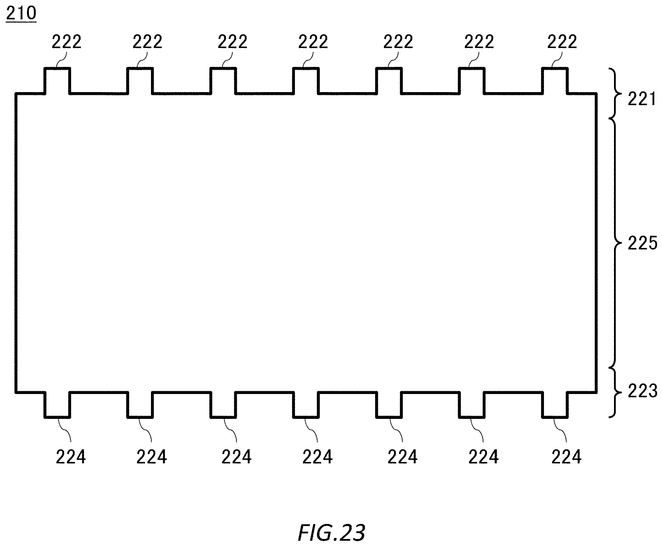

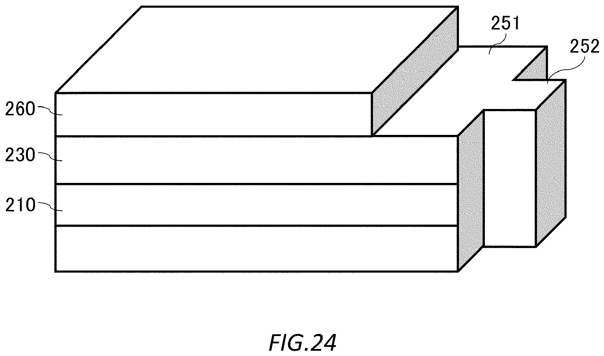

Fig. 23 and Fig. 24 are illustrations for describing the manufacturing process of the anode collector 200. The generation unit 434 forms a plurality of convex portions 222 at the end 221 by cutting a part of the end 221 of the quadrangular-shaped resin layer 210, forms a plurality of convex portions 224 at the end 223 by cutting a part of the end 223 of the resin layer 210, and thereafter causes molecular bonding of metal to the entire resin layer 210, arranges the active material on a region 225 on the upper surface of a portion other than the end 221 and the end 223 of the resin layer 210, and cuts the resin layer 210, thereby generating a plurality of anode collectors 200 each including both one convex portion 222 or one convex portion 224, and a portion on which the active material is arranged. The generation unit 434 may cut the resin layer 210 into a rectangular shape. Although description is made for the manufacturing process of the anode collector 200 in Fig. 23 and Fig. 24, it also applies to the manufacturing process of the cathode collector 300. The generation unit 434 may use sputtering instead of molecular bonding.

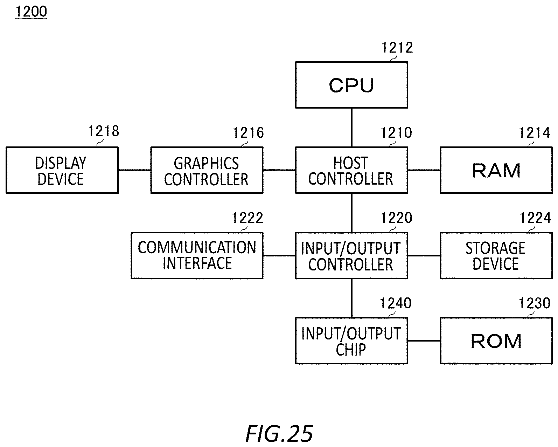

Fig. 25 schematically illustrates an example of a hardware configuration of a computer 1200 that functions as the manufacturing system 400. A program installed in the computer 1200 can cause the computer 1200 to function as one or more "units" of a device according to the present embodiment, or cause the computer 1200 to perform operations associated with the device or perform one or more "units" thereof according to the present embodiment, and/or cause the computer 1200 to perform the process according to the present embodiment or perform the steps of the process. Such a program may be executed by a CPU 1212 to cause the computer 1200 to perform particular operations associated with some or all of the blocks in the flowcharts and block diagrams described in the specification.

The computer 1200 according to the present embodiment includes the CPU 1212, a RAM 1214, and a graphics controller 1216, which are connected to each other via a host controller 1210. The computer 1200 also includes input/output units such as a communication interface 1222, a storage device 1224, a DVD drive and an IC card drive, which are connected to the host controller 1210 via an input/output controller 1220. The DVD drive may be a DVD-ROM drive, a DVD-RAM drive, and the like. The storage device 1224 may be a hard disk drive, a solid-state drive, and the like. The computer 1200 also includes a ROM 1230 and a legacy input/output unit such as a keyboard, which are connected to the input/output controller 1220 via an input/output chip 1240.

The CPU 1212 operates according to the programs stored in the ROM 1230 and the RAM 1214, thereby controlling each unit. The graphics controller 1216 obtains image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive reads the programs or the data from the DVD-ROM or the like, and provides the storage device 1224 with the programs or the data. The IC card drive reads programs and data from an IC card and/or writes programs and data into the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer readable storage medium such as the DVD-ROM or the IC card. The program is read from the computer readable storage medium, installed into the storage device 1224, RAM 1214, or ROM 1230, which are also examples of a computer readable storage medium, and executed by the CPU 1212. Information processing written in these programs is read by the computer 1200, and provides cooperation between the programs and the various types of hardware resources described above. A device or method may be constituted by realizing the operation or processing of information in accordance with the usage of the computer 1200.

For example, in a case where a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM, or the IC card, and transmits the read transmission data to a network or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage device 1224, the DVD drive (DVD-ROM), the IC card, etc., and perform various types of processing on the data on the RAM 1214. Then, the CPU 1212 may write the processed data back in the external recording medium.

Various types of information such as various types of programs, data, tables, and databases may be stored in a recording medium and subjected to information processing. The CPU 1212 may execute, on the data read from the RAM 1214, various types of processing including various types of operations, information processing, conditional judgement, conditional branching, unconditional branching, information retrieval/replacement, or the like described throughout the present disclosure and specified by instruction sequences of the programs, to write the results back to the RAM 1214. In addition, the CPU 1212 may retrieve information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby obtaining the attribute value of the second attribute associated with the first attribute satisfying a predetermined condition.

The above described program or software modules may be stored in the computer readable storage medium on or near the computer 1200. In addition, a recording medium such as a hard disk or a RAM provided in a server system connected to a dedicated communication network or the Internet can be used as the computer readable storage medium, thereby providing the program to the computer 1200 via the network.

Blocks in flowcharts and block diagrams in the present embodiments may represent steps of processes in which operations are performed or "units" of devices responsible for performing operations. A specific step and "unit" may be implemented by dedicated circuitry, programmable circuitry supplied along with a computer readable instruction stored on a computer readable storage medium, and/or a processor supplied along with the computer readable instruction stored on the computer readable storage medium. The dedicated circuitry may include a digital and/or analog hardware circuit, or may include an integrated circuit (IC) and/or a discrete circuit. The programmable circuitry may include, for example, a reconfigurable hardware circuit including logical AND, logical OR, logical XOR, logical NAND, logical NOR, and other logical operations, and a flip-flop, a register, and a memory element, such as a field-programmable gate array (FPGA) and a programmable logic array (PLA).

The computer readable storage medium may include any tangible device capable of storing an instruction performed by an appropriate device, so that the computer readable storage medium having the instruction stored thereon constitutes a product including an instruction that may be performed in order to provide means for performing an operation specified by a flowchart or a block diagram. Examples of the computer readable storage medium may include an electronic storage medium, a magnetic storage medium, an optical storage medium, an electromagnetic storage medium, a semiconductor storage medium, and the like. More specific examples of the computer readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object-oriented programming language such as Smalltalk (registered trademark), JAVA (registered trademark), and C++, and a conventional procedural programming language such as a "C" programming language or a similar programming language.

The computer readable instruction may be provided to a general purpose computer, a special purpose computer, or a processor or programmable circuitry of another programmable data processing apparatus locally or via a local area network (LAN), a wide area network (WAN) such as the Internet or the like in order that the general purpose computer, the special purpose computer, or the processor or the programmable circuitry of the other programmable data processing apparatus performs the computer readable instruction to provide means for performing operations specified by the flowchart or the block diagram. An example of the processor includes a computer processor, processing unit, microprocessor, digital signal processor, controller, microcontroller, or the like.

While the present invention has been described by way of the embodiments, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

EXPLANATION OF REFERENCES

10: battery component, 20: anode, 30: cathode, 40: separator, 50: laminate battery, 100: multilayer collector, 102: tab, 104: Sub-tab, 110: portion to be welded, 120: welding spot, 122: welding diameter, 130: fixing portion, 132:

fixing portion width, 134: width, 150: multilayer collector, 200: anode collector, 210: resin layer, 211: upper surface, 212: lower surface, 213: side surface, 221: end, 222: convex portion, 223: end, 224: convex portion, 225: region, 230: metal layer, 231: metal layer, 232: metal layer, 240: hole, 242: inner face, 250: multilayered body, 251: end, 252: convex portion, 253: end, 254: convex portion, 255: region, 256: partial resin layer, 257: partial resin layer, 260: active material, 280: laminate, 300: cathode collector, 310: resin layer, 330: metal layer, 380: laminate, 400: manufacturing system, 402: preparation unit, 410: multilayer collector generation unit, 412: arrangement unit, 414: heat compression unit, 416: welding unit, 420: battery generation unit, 430: collector generation unit, 502: heat compression machine, 504: heat compression machine, 512: welding machine, 514: welding machine, 1200: computer, 1210: host controller, 1212: CPU, 1214: RAM, 1216: graphics controller, 1218: display device, 1220: input/output controller, 1222: communication interface, 1224: storage device, 1230: ROM, 1240: input/output chip.

**Claims**

1. A manufacturing method of a multilayer collector comprising:

preparing a resin layer, and a laminate in which collectors including a first metal layer and a second metal layer arranged on both sides of the resin layer are laminated;
arranging a tab on one of an upper surface side and a lower surface side of the laminate, and a Sub-tab on another;
performing heat compression on a portion to be welded of the tab, the laminate, and the Sub-tab in a laminating direction, to elute resin of the resin layer in the portion to be welded; and
performing resistance welding on the portion to be welded.

2. The manufacturing method of the multilayer collector according to claim 1, wherein in the performing heat compression, only the portion to be welded of the tab, the laminate, and the Sub-tab are subjected to heat compression in a laminating direction, to elute resin in the resin layer of the portion to be welded.

3. The manufacturing method of the multilayer collector according to claim 1 or 2, wherein in the preparing, the laminate is prepared in which the collectors including the resin layer, the first metal layer, and the second metal layer, which has a thickness that satisfies a following numerical expression 1, are laminated.

Numerical expression 1

$$0.04 \leq \frac{\text{(THICKNESS OF FIRST METAL LAYER + THICKNESS OF SECOND METAL LAYER) /}}{\text{(THICKNESS OF RESIN LAYER)}}$$

4. The manufacturing method of the multilayer collector according to any one of claims 1 to 3, wherein in the preparing, the laminate is prepared in which the collectors including a resin layer with a thickness of 3 to 7 $\mu$m, the first metal layer with a thickness of 0.1 to 2 pm, and the second metal layer with a thickness of 0.1 to 2 pm are laminated.

5. The manufacturing method of the multilayer collector according to claim 3 or 4, wherein the portion to be welded has a circular shape with a diameter of 1 to 10 mm.

6. The manufacturing method of the multilayer collector according to claim 5, wherein a diameter of the portion to be welded, a total of a thickness of the first metal layer and a thickness of the second metal layer, and a thickness of the resin layer satisfy a following numerical expression 2.

Numerical expression 2

$$0.25 \leq \frac{\text{DIAMETER OF PORTION TO BE WELDED}}{\text{THICKNESS OF FIRST METAL LAYER + THICKNESS OF SECOND METAL LAYER}} \times \text{THICKNESS OF RESIN LAYER} \leq 500$$

7. The manufacturing method of the multilayer collector according to claim 5, wherein a diameter of the portion to be welded, a total of a thickness of the first metal layer and a thickness of the second metal layer, and a thickness of the resin layer satisfy a following numerical expression 3.

Numerical expression 3

$$2.25 \leq \frac{\text{DIAMETER OF PORTION TO BE WELDED}}{\text{THICKNESS OF FIRST METAL LAYER +}\atop\text{THICKNESS OF SECOND METAL LAYER}} \times \text{THICKNESS OF RESIN LAYER} \leq 175$$

8. The manufacturing method of the multilayer collector according to claim 5, wherein a diameter of the portion to be welded, a total of a thickness of the first metal layer and a thickness of the second metal layer, and a thickness of the resin layer satisfy a following numerical expression 4.

Numerical expression 4

$$4.5 \leq \frac{\text{DIAMETER OF PORTION TO BE WELDED}}{\text{THICKNESS OF FIRST METAL LAYER +}\atop\text{THICKNESS OF SECOND METAL LAYER}} \times \text{THICKNESS OF RESIN LAYER} \leq 21$$

9. The manufacturing method of the multilayer collector according to claim 5, wherein a diameter of the portion to be welded, a total of a thickness of the first metal layer and a thickness of the second metal layer, and a thickness of the resin layer satisfy a following numerical expression 5.

Numerical expression 5

$$7.5 \leq \frac{\text{DIAMETER OF PORTION TO BE WELDED}}{\text{THICKNESS OF FIRST METAL LAYER +}\atop\text{THICKNESS OF SECOND METAL LAYER}} \times \text{THICKNESS OF RESIN LAYER} \leq 15$$

10. The manufacturing method of the multilayer collector according to any one of claims 1 to 8, wherein thermal contraction in TD direction of resin in the resin layer is 1% or less.

11. The manufacturing method of the multilayer collector according to any one of claims 1 to 10, wherein material of the first metal layer and the second metal layer is copper, and
material of the resin layer is polyimide, polypropylene, polyethylene, polyphenylene sulfide, or polyethylene terephthalate.

12. A program for causing a computer to perform the manufacturing method of the multilayer collector according to any one of claims 1 to 11.

13. A manufacturing method of a battery comprising:

preparing a resin layer having a thickness of 3 to 7 pm and a laminate in which collectors including a first metal layer and a second metal layer each having a thickness of 0.1 to 2 pm arranged on both sides of the resin layer are laminated;
arranging a tab on one of an upper surface side and a lower surface side of the laminate, and a Sub-tab on another;
performing heat compression on a portion to be welded with a diameter of 1 to 10 mm of the tab, the laminate, and the Sub-tab in a laminating direction, to elute resin in the resin layer of the portion to be welded;
performing resistance welding on the portion to be welded to generate a multilayer collector; and
generating a battery of a flight vehicle having a solar panel and the battery mounted thereon that utilizes electrical power of the battery by using the multilayer collector.

14. The manufacturing method of the battery according to claim 13, wherein in the generating the battery, the battery of a HAPS having the solar panel and the battery mounted thereon that flies in a stratosphere to provide wireless communication service on ground is generated by using the multilayer collector.

15. A manufacturing system comprising:

a laminate preparation unit that prepares a resin layer, and a laminate in which collectors including a first metal layer and a second metal layer arranged on both sides of the resin layer are laminated;
an arrangement unit that arranges a tab on one of an upper surface side and a lower surface side of the laminate, and a Sub-tab on another;
a heat compression unit that performs heat compression on a portion to be welded of the tab, the laminate, and the Sub-tab in a laminating direction, to elute resin of the resin layer in the portion to be welded; and
a welding unit that performs resistance welding on the portion to be welded.

16. A multilayer collector in which a plurality of collectors are laminated with a tab arranged on one of an upper side and a lower side and a Sub-tab on another, the multilayer collector comprising:

a first region that is not between the tab and the Sub-tab, including a resin layer intermediate between each of the plurality of collectors;
a second region that is between the tab and the Sub-tab, including a resin layer intermediate between each of the plurality of collectors; and
a third region that is between the tab and the Sub-tab, having less amount of resin intermediate between each of the plurality of collectors than an amount of resin in each resin layer between the plurality of collectors in the first region or having no resin intermediate between each of plurality of the collectors, the third region being subjected to resistance welding.

17. A battery having the multilayer collector according to claim 16.

18. A moving body having the battery according to claim 17.

19. A flight vehicle having the battery according to claim 17.

FIG.1

FIG.2

*FIG.3*

380

331
310  300
332

FIG.4

400

```
                402                      430
        ┌──────────────┐        ┌──────────────────┐
        │ PREPARATION  │◄───────│    COLLECTOR     │
        │    UNIT      │        │ GENERATION UNIT  │
        └──────────────┘        │                  │
               ▲▼               │          432     │
            410                 │   ┌──────────────┐│
   ┌─────────────────────┐      │   │ PREPARATION  ││
   │ MULTILAYER COLLECTOR │     │   │    UNIT      ││
   │   GENERATION UNIT    │     │   └──────────────┘│
   │                      │     │          │        │
   │            412       │     │          ▼  434   │
   │   ┌──────────────┐   │     │   ┌──────────────┐│
   │   │ ARRANGEMENT  │   │     │   │  GENERATION  ││
   │   │    UNIT      │   │     │   │    UNIT      ││
   │   └──────────────┘   │     │   └──────────────┘│
   │          │           │     └──────────────────┘
   │          ▼   414     │
   │   ┌──────────────┐   │
   │   │    HEAT      │   │
   │   │ COMPRESSION  │   │
   │   │    UNIT      │   │
   │   └──────────────┘   │
   │          │           │
   │          ▼   416     │
   │   ┌──────────────┐   │
   │   │   WELDING    │   │
   │   │    UNIT      │   │
   │   └──────────────┘   │
   └─────────────────────┘
               │    420
               ▼
        ┌──────────────┐
        │   BATTERY    │
        │ GENERATION   │
        │    UNIT      │
        └──────────────┘
```

*FIG.5*

*FIG.6*

FIG.7

*FIG.8*

FIG.9

*FIG.10*

FIG.11

210  211

213

212

230

210

FIG.12

210

HOLE

240    240

240    240    211

213

212

200

A

231
210
232

A

*FIG.13*

FIG.14

START

PREPARE RESIN LAYER — S102

PERFORM MOLECULAR BONDING
OF METAL TO RESIN LAYER — S104

ARRANGE ACTIVE MATERIAL — S106

CUT — S108

END

*FIG.15*

250

FIG.16

FIG.17

200

FIG.18

```
                          ┌─────────────┐
                          │    START    │
                          └──────┬──────┘
                                 │
                                 ▼
              ┌──────────────────────────────────┐
              │       PREPARE RESIN LAYER         │──┐ S202
              └──────────────────┬───────────────┘
                                 │
                                 ▼
              ┌──────────────────────────────────┐
              │   PERFORM MOLECULAR BONDING       │──┐ S204
              │     OF METAL TO RESIN LAYER       │
              └──────────────────┬───────────────┘
                                 │
                                 ▼
              ┌──────────────────────────────────┐
              │      ARRANGE ACTIVE MATERIAL      │──┐ S206
              └──────────────────┬───────────────┘
                                 │
                                 ▼
              ┌──────────────────────────────────┐
              │        CUT INTO SAW-SHAPE         │──┐ S208
              └──────────────────┬───────────────┘
                                 │
                                 ▼
              ┌──────────────────────────────────┐
              │    CUT INTO RECTANGULAR-SHAPE     │──┐ S210
              └──────────────────┬───────────────┘
                                 │
                                 ▼
                          ┌─────────────┐
                          │     END     │
                          └─────────────┘
```

*FIG.19*

FIG.20

200

251

252

260

230

210

FIG.21

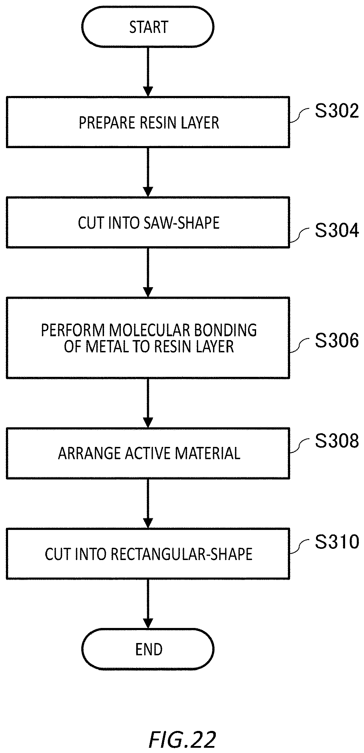

FIG.22

FIG.23

*FIG.24*

1200

1212
CPU

1218
DISPLAY
DEVICE

1216
GRAPHICS
CONTROLLER

1210
HOST
CONTROLLER

1214
RAM

1222
COMMUNICATION
INTERFACE

1220
INPUT/OUTPUT
CONTROLLER

1224
STORAGE
DEVICE

1240
INPUT/OUTPUT
CHIP

1230
ROM

FIG.25

| | INTERNATIONAL SEARCH REPORT | International application No. |
|---|---|---|
| | | **PCT/JP2022/024354** |

**A.    CLASSIFICATION OF SUBJECT MATTER**

*H01M 50/536*(2021.01)i; *H01M 4/66*(2006.01)i; *H01M 50/534*(2021.01)i; *H01M 50/54*(2021.01)i
FI:    H01M50/536; H01M4/66 A; H01M50/54; H01M50/534

According to International Patent Classification (IPC) or to both national classification and IPC

**B.    FIELDS SEARCHED**

Minimum documentation searched (classification system followed by classification symbols)

H01M50/536; H01M4/66; H01M50/534; H01M50/54

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)


**C.    DOCUMENTS CONSIDERED TO BE RELEVANT**

| Category* | Citation of document, with indication, where appropriate, of the relevant passages | Relevant to claim No. |
|---|---|---|
| A | JP 2012-129114 A (SHARP CORP.) 05 July 2012 (2012-07-05)<br>paragraphs [0086], [0150]-[0157], fig. 39, 40, 43 | 1-19 |
| A | JP 2012-155974 A (SHARP CORP.) 16 August 2012 (2012-08-16)<br>paragraphs [0028], [0068]-[0072], [0101]-[0107], fig. 3-6, 19, 20 | 1-19 |
| A | WO 2009/157263 A1 (SHARP CORP.) 30 December 2009 (2009-12-30) | 1-19 |
| P, A | WO 2021/125110 A1 (SOFTBANK CORP.) 24 June 2021 (2021-06-24)<br>paragraphs [0025]-[0031], [0058]-[0060], [0067], fig. 1-3, 10 | 1-19 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/024354**

| Patent document cited in search report | | | Publication date (day/month/year) | Patent family member(s) | | | Publication date (day/month/year) |
|---|---|---|---|---|---|---|---|
| JP | 2012-129114 | A | 05 July 2012 | WO | 2012/081368 | A1 | |
| | | | | paragraphs [0086], [0150]-[0157], fig. 39, 40, 43 | | | |
| JP | 2012-155974 | A | 16 August 2012 | WO | 2012/102220 | A1 | |
| | | | | paragraphs [0028], [0068]-[0072], [0101]-[0107], fig. 3-6, 19, 20 | | | |
| WO | 2009/157263 | A1 | 30 December 2009 | (Family: none) | | | |
| WO | 2021/125110 | A1 | 24 June 2021 | JP | 2021-97018 | A | |
| | | | | paragraphs [0012]-[0018], [0071]-[0073], [0080], fig. 1-3, 10 | | | |

Form PCT/ISA/210 (patent family annex) (January 2015)

**REFERENCES CITED IN THE DESCRIPTION**

**Patent documents cited in the description**

- JP 2018181823 A